(19) **Europäisches Patentamt / European Patent Office / Office européen des brevets**

(11) **EP 1 764 497 B1**

(12) **EUROPEAN PATENT SPECIFICATION**

(45) Date of publication and mention
of the grant of the patent:
**19.10.2016 Bulletin 2016/42**

(21) Application number: **05758021.9**

(22) Date of filing: **05.07.2005**

(51) Int Cl.:
*F02D 41/38* (2006.01)    *F01N 3/02* (2006.01)
*F02B 37/00* (2006.01)    *F02D 23/00* (2006.01)
*F02D 41/02* (2006.01)    *F02D 45/00* (2006.01)
*F02D 41/40* (2006.01)    *F02D 41/00* (2006.01)

(86) International application number:
**PCT/JP2005/012723**

(87) International publication number:
**WO 2006/004218 (12.01.2006 Gazette 2006/02)**

(54) **FUEL SUPPLY CONTROL DEVICE FOR INTERNAL COMBUSTION ENGINE**

KRAFTSTOFFVERSORGUNGSSTEUERVORRICHTUNG FÜR VERBRENNUNGSMOTOR

DISPOSITIF DE GESTION D'ADMISSION DE CARBURANT POUR MOTEUR A COMBUSTION INTERNE

(84) Designated Contracting States:
**DE FR IT**

(30) Priority: **05.07.2004 JP 2004197972**

(43) Date of publication of application:
**21.03.2007 Bulletin 2007/12**

(73) Proprietor: **TOYOTA JIDOSHA KABUSHIKI KAISHA**
**Toyota-shi, Aichi-ken, 471-8571 (JP)**

(72) Inventor: **MATSUNAGA, Akio**
**TOYOTA JIDOSHA KABUSHIKI KAISHA**
**Toyota-shi, Aichi**
**4718571 (JP)**

(74) Representative: **TBK**
**Bavariaring 4-6**
**80336 München (DE)**

(56) References cited:
**DE-A1- 19 525 667**    **FR-A1- 2 840 649**
**JP-A- 7 103 013**    **JP-A- 2002 364 413**
**JP-A- 2003 206 722**    **US-B2- 6 708 487**

EP 1 764 497 B1

## Description

FIELD OF THE INVENTION

The present invention relates to a fuel supply control device for an internal combustion engine.

BACKGROUND ART

A fuel supply control device according to the preambles of claims 1, 2 and 4 is disclosed in FR 2 840 649 A1.

Further, an internal combustion engine is known which includes an exhaust supercharger and a fuel injector that directly injects fuel into a cylinder, in which, when the engine is operated in a specific state, an auxiliary fuel is supplied from the fuel injector at the power stroke after the main fuel is supplied, thereby increasing an exhaust energy, which is the energy of the exhaust gas that enters the exhaust supercharger (see Japanese Unexamined Patent Publication No. 7-103013). In this internal combustion engine, it is considered to be in the specific operation state when a vehicle speed, an engine speed, an injection amount of the main fuel, and a depression of the accelerator pedal are equal to or above respective threshold values.

When the auxiliary fuel is supplied to increase the exhaust energy, a supercharge pressure increases, thereby increasing the engine output. However, when the auxiliary fuel is supplied, a fuel consumption rate or an exhaust emission amount may increase. Therefore, if the auxiliary fuel is supplied only because the engine is in the specific operation state as in the above-mentioned internal combustion engine, there may be a risk that the auxiliary fuel cannot be effectively used to increase the exhaust energy. Specifically, there may be a case where the actual engine output substantially coincides with the required output even if the depression of the accelerator pedal is large. In this case, it is not, substantially, necessary to supply the auxiliary fuel to increase the exhaust energy. Alternatively, even when the actual engine output is small but if the required output is small, it is not necessary to supply the auxiliary fuel.

DISCLOSURE OF THE INVENTION

It is an object of the present invention to provide a fuel supply control device for an internal combustion engine, capable of effectively using auxiliary fuel to increase exhaust energy.

This object is achieved by a fuel supply control device having the features of claims 1, 2 or 4.

Advantageous further developments are set out in the dependent claims.

BRIEF DESCRIPTION OF THE DRAWINGS

Fig. 1 is an overall view of an internal combustion engine;
Fig. 2 is a diagram for explaining a main fuel Qm and an auxiliary fuel Qv;
Fig. 3 is a diagram for explaining a first embodiment of the present invention, in the case where an engine output is represented by a torque;
Fig. 4 is a diagram for explaining the first embodiment of the present invention, in the case where an engine output is represented by a supercharge pressure;
Fig. 5 is a diagram showing a required torque TQT;
Fig. 6 is a diagram showing an actual torque TQA;
Fig. 7 is a diagram showing a required supercharge pressure PMT;
Fig. 8 is a flowchart showing a supply control routine of an auxiliary fuel according to the first embodiment of the present invention;
Fig. 9 is a diagram for explaining a second embodiment of the present invention, in the case where an engine output is represented by a supercharge pressure;
Fig. 10 is a diagram showing a set value PMS1;
Fig. 11 is a flowchart showing a supply control routine of an auxiliary fuel according to the second embodiment of the present invention;
Fig. 12 is a flowchart showing a supply and stop control routine of an auxiliary fuel according to the second embodiment of the present invention;
Fig. 13 is a diagram for explaining a third embodiment of the present invention, in the case where an engine output is represented by a supercharge pressure;
Fig. 14 is a diagram showing a set value DPMA1;
Fig. 15 is a flowchart showing a supply and stop control routine of an auxiliary fuel according to the third embodiment of the present invention;
Fig. 16 is a diagram for explaining a fourth embodiment of the present invention, in the case where an engine output is represented by a supercharge pressure;
Fig. 17 is a diagram showing a set value DPMS1;
Fig. 18 is a flowchart showing a supply and stop control routine of an auxiliary fuel according to the fourth embodiment of the present invention;
Fig. 19 is a diagram showing a set value DOPS1 according to another embodiment of the present invention;
Figs. 20A and 20B are diagrams for explaining a fifth embodiment of the present invention, in the case where the exhaust energy is represented by an exhaust gas temperature;
Fig. 21 is a flowchart showing a supply and stop control routine of an auxiliary fuel according to the fifth embodiment of the present invention;
Figs. 22A, 22B, and 22C are diagrams showing an exhaust emission amount QEM;
Fig. 23 is a flowchart showing a supply and stop control routine of an auxiliary fuel according to a sixth embodiment of the present invention;

Fig. 24 is a diagram for explaining a seventh embodiment of the present invention;

Fig. 25 is a flowchart showing a supply and stop control routine of an auxiliary fuel according to a seventh embodiment of the present invention;

Fig. 26 is a diagram for explaining an eighth embodiment of the present invention; and

Fig. 27 is a flowchart showing a supply and stop control routine of an auxiliary fuel according to an eighth embodiment of the present invention.

BEST MODE FOR CARRYING OUT THE INVENTION

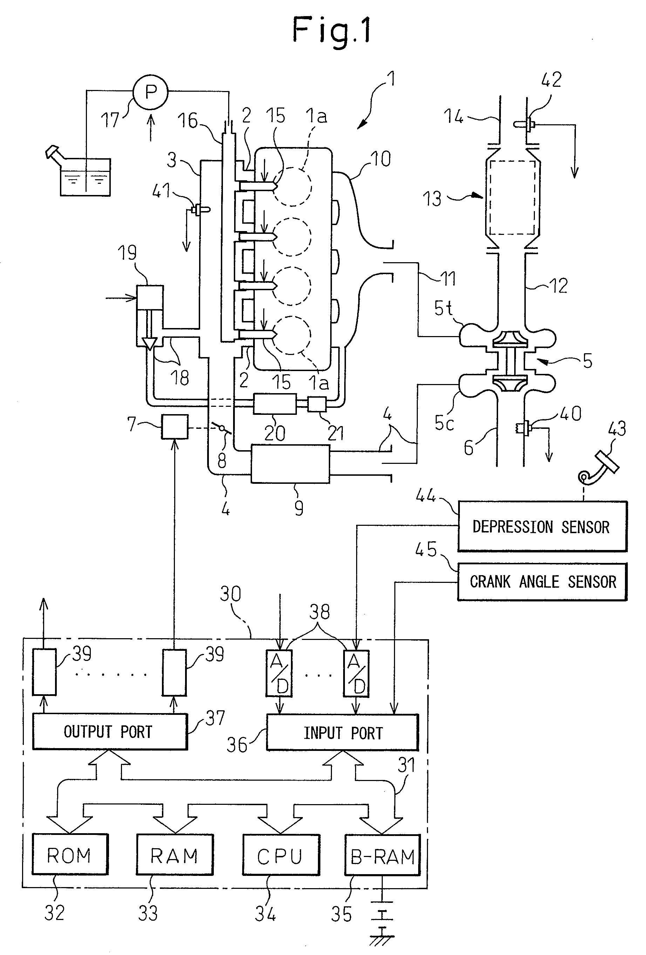

Fig. 1 shows a case where the present invention is applied to an internal combustion engine of a compression ignition type. The present invention can also be applied to an internal combustion engine of a spark ignition type.

Referring to Fig. 1, an engine body 1 has four cylinders 1a, for example. Each cylinder 1a is connected to a common surge tank 3 via a corresponding intake branch 2. The surge tank 3 is connected to an exit of a compressor 5c of an exhaust supercharger or a turbocharger 5 of a variable nozzle type, via an intake duct 4. An intake air introducing pipe 6 is connected to an entrance of the compressor 5c. A throttle valve 8 driven by an actuator 7 of an electric control type or a negative pressure control type is disposed within the intake duct 4. A cooling device 9 for cooling the intake air that flows through the intake duct 4 is disposed around the intake duct 4.

Each cylinder 1a is also connected to an entrance of an exhaust turbine 5t of the turbocharger 5 via an exhaust manifold 10 and an exhaust pipe 11. An outlet of the exhaust turbine 5t is connected to a particulate filter 13 via an exhaust pipe 12. An exhaust pipe 14 is connected to an outlet of the particulate filter 13. The particulate filter 13 is one for collecting particulates, mainly of solid carbon, that are included in the exhaust gas. A NOx absorbent, for example, may be carried on the particulate filter 13. The NOx absorbent performs a NOx accumulation and reduction in which it accumulates NOx contained in the exhaust gas therein when the average air-fuel ratio of the exhaust gas entering the absorbent is lean, and reduces the accumulated NOx with a reducing agent contained in the exhaust gas when the air-fuel ratio of the entering exhaust gas is lowered, thereby decreasing the amount of the accumulated NOx. The NOx absorbent is comprised of barium Ba and platinum Pt that are held on an alumina carrier, for example.

A fuel injector 15 is disposed within each cylinder 1a. The fuel injectors 15 are connected to a fuel pump 17, of an electrically controlled-type that can change the pumping amount, via a common fuel accumulator or a common rail 16. A fuel pressure sensor (not shown) that detects a fuel pressure in the common rail 16 is fitted to the common rail 16. A pumping amount of the fuel pump 17 is controlled to make the fuel pressure in the common rail 16 equal to a target fuel pressure, on the basis of an output signal of the fuel pressure sensor.

Referring further to Fig. 1, the exhaust manifold 10 and the surge tank 3 are connected to each other via an exhaust gas recirculation (hereinafter referred to as an EGR) path 18. An EGR control valve of an electrically control type 19 is disposed within the EGR path 18. A cooling device 20 for cooling an EGR gas that flows through the EGR path 18 is disposed around the EGR path 18. An oxidizing catalyst 21 is disposed within the EGR path 18 and upstream of the cooling device 20.

An electric control unit 30 is comprised of a digital computer including a ROM (read-only memory) 32, a RAM (random access memory) 33, a CPU (microprocessor) 34, a backup RAM (B-RAM) 35, an input port 36, and an output port 37, which are connected with each other by a bidirectional bus 31. An air flow meter 40 for detecting an amount of intake air is fitted to the intake air introducing pipe 6. A supercharge pressure sensor 41 for detecting a pressure in the surge tank 3 of a supercharge pressure, is fitted to the downstream of the throttle valve 8, and to the surge tank 3, for example. An exhaust gas temperature sensor 42 for detecting a temperature of the exhaust gas exhausted from the particulate filter 13 is fitted to the exhaust pipe 14, and a depression sensor 44 for detecting a depression of an accelerator pedal 43 is connected to the accelerator pedal 43. The temperature of the exhaust gas detected by the exhaust temperature sensor 42 expresses a temperature of the particulate filter 13. Output voltages of the sensors 40, 41, 42, and 44 are input to the input port 36 via corresponding analog-to-digital (A/D) converters 38. A crank angle sensor 45 that generates an output pulse each time when a crank shaft rotates by 10 degrees, for example, is connected to the input port 36. The CPU 34 calculates the engine speed based on these output pulses. On the other hand, the output port 37 is connected to the actuator 7, the fuel injectors 15, the fuel pump 17, and the EGR control valve 19 via corresponding driving circuits 39.

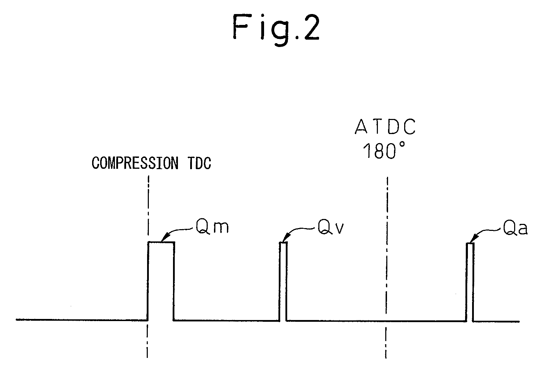

A collected amount of the particulates on the particulate filter 13 increases along lapse of time. On the other hand, when the temperature of the particulate filter 13 is held at equal to or 600 °C, for example, under a lean air-fuel ratio, the particulates on the particulate filter 13 are oxidized and removed. So, in the internal combustion engine shown in Fig. 1, when the amount of the particulates collected on the particulate filter 13 exceeds a certain level, a temperature increasing control is carried out wherein the temperature of the particulate filter 13 is increased and held at or above 600 °C to remove the particulates from the particulate filter 13. Specifically, in order to perform the temperature increasing control, an additional fuel Qa is supplied from the fuel injector 15 at the exhaust stroke, for example, after main fuel Qm is supplied around a top dead center (TDC), as shown in Fig. 2. This additional fuel Qa reaches the particulate filter 13 without being substantially combusted in the cylinder, the exhaust manifold 10, or the exhaust pipe 11, and is combusted in the particulate filter 13. As a result, the temperature of the particulate filter 13 will increase.

On the other hand, the turbocharger 5 supercharges intake air with an exhaust energy which is energy of the exhaust gas, thereby increasing the output of the engine. In this case, if the exhaust energy supplied to the turbocharger 5 is increased to increase the rotation number of the compressor 5c, that is, the turbocharger speed, the output of the turbocharger 5 is increased. As a result, the output of the engine is increased.

In each embodiment of the present invention, in order to increase the exhaust energy, an auxiliary fuel Qv is supplied from the fuel injector 15 at the power stroke, after the main fuel Qm is supplied around the top dead center (TDC) of the compression stroke, as shown in Fig. 2. This auxiliary fuel Qv is combusted in the cylinder, the exhaust manifold 10, or the exhaust pipe 11, thereby increasing the exhaust energy. This allows increasing the exhaust energy without changing an injection parameter such as an injection time of the main fuel Qm. The auxiliary fuel Qv contributes little to the engine output.

However, if the auxiliary fuel Qv is supplied only because the depression of the accelerator pedal 43 is large, the auxiliary fuel Qv cannot be used effectively, as described at the beginning of this specification. In other words, the auxiliary fuel Qv should be supplied only when the engine output actually needs to be increased.

So, in each embodiment of the present invention, it is judged whether the output shortage of the actual engine output against the required output is larger than a predetermined permissible limit, and the auxiliary fuel Qv is supplied to increase the exhaust energy when it is judged that the output shortage is larger than the permissible limit.

Specifically, first, a required output representative value OPT that represents the required output and an actual output representative value OPA that represents the actual engine output are obtained. Next, the actual output representative value OPA is subtracted from the required output representative value OPT, thereby obtaining an output shortage representative value OPS that represents the output shortage (=OPT-OPA). If the output shortage representative value OPS is larger than a permissible limit value LMT corresponding to the permissible limit, the auxiliary fuel Qv is supplied.

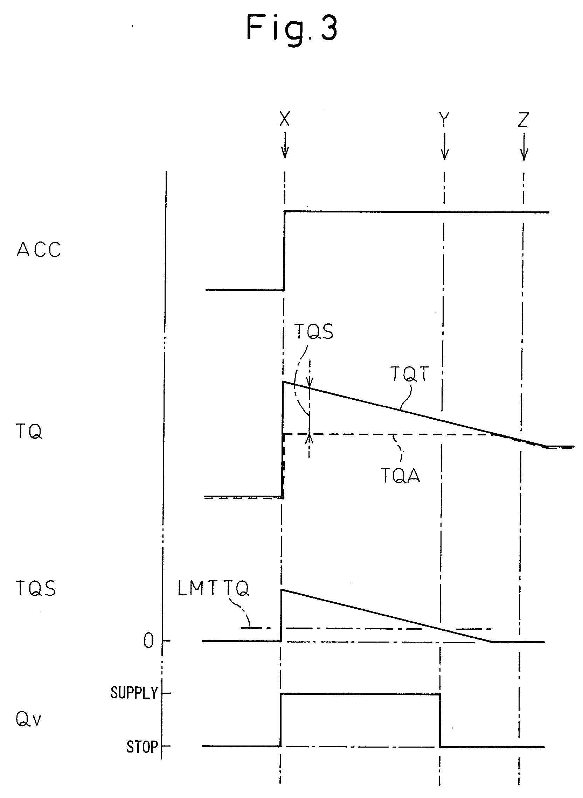

Fig. 3 shows a case where an engine output is represented by a torque TQ. In this case, the required output representative value OPT is a required torque TQT, the actual output representative value OPA is an actual TQA, and the output shortage representative value OPS is a torque shortage TQS (=TQT-TQA). As indicated by an arrow X in Fig. 3, when a depression ACC of the accelerator pedal 43 is increased stepwise, the required torque TQT is also increased stepwise. However, the actual torque TQA does not increase like the required torque TQT. As a result, the shortage TQS of the actual torque TQA against the required torque TQT increases stepwise from substantially zero. After that, when the torque shortage TQS exceeds a permissible limit value LMTTQ which may be constant, the supply of the auxiliary fuel Qv is then started. After the supply of the auxiliary fuel Qv is started, the torque shortage TQS gradually becomes smaller. After that, when the torque shortage TQS is smaller than the permissible limit value LMTTQ as indicated by an arrow Y in Fig. 3, the supply of the auxiliary fuel Qv is stopped.

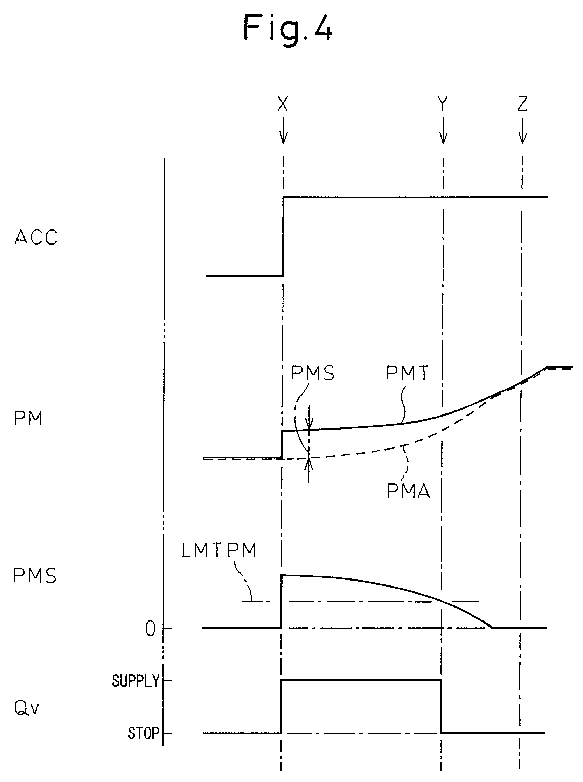

On the other hand, Fig. 4 shows a case where the engine output is represented by the supercharge pressure PM. In this case, the required output representative value OPT is a required supercharge pressure PMT, the actual output representative value OPA is an actual supercharge pressure PMA, and the output shortage representative value OPS is a supercharge pressure shortage PMS (=PMT-PMA). As indicated by the arrow X in Fig. 4, when the depression ACC of the accelerator pedal 43 is increased stepwise, the required supercharge pressure PMT is also increased stepwise. However, the actual supercharge pressure PMA does not increase like the required supercharge pressure PMT. As a result, the shortage PMS of the actual supercharge pressure PMT against the required supercharge pressure PMT increases stepwise from substantially zero. After that, when the supercharge pressure shortage PMS exceeds a permissible limit value LMTPM which may be constant, the supply of the auxiliary fuel Qv is started. After the supply of the auxiliary fuel Qv is started, the supercharge pressure shortage PMS gradually becomes smaller. After that, when the supercharge pressure shortage PMS is smaller than the permissible limit value LMTPM as indicated by the arrow Y in Fig. 4, the supply of the auxiliary fuel Qv is stopped.

In both cases, the auxiliary fuel Qv is temporarily supplied to temporarily increase the exhaust energy when the output shortage representative value OPS is larger than the permissible limit value LMT, and the supply of the auxiliary fuel Qv is stopped otherwise. In other words, as indicated by an arrow Z in Fig. 3 or Fig. 4, there may be a case where the depression ACC of the accelerator pedal 43 is large but the actual output substantially coincides with the required output. In such a case, the auxiliary fuel Qv is not supplied. Therefore, a fuel consumption rate is reduced, and the exhaust emission amount, that is, an amount of hydrocarbon, particulates or smoke contained in the exhaust gas is reduced. Accordingly, the auxiliary fuel Qv is used effectively. This is the basic concept according to the first embodiment of the present invention.

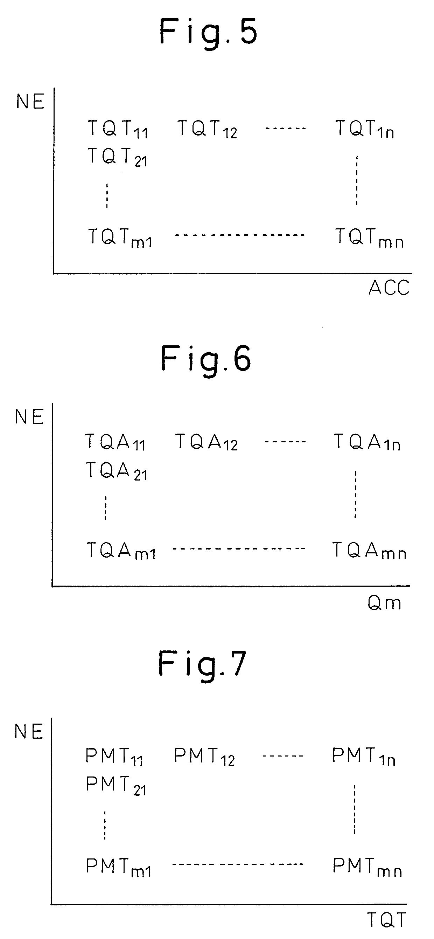

The required output representative value OPT and the actual output representative value OPA mentioned above are obtained as follows. In the example shown in Fig. 3, the required torque TQT is stored in the ROM 32 in advance in the form of a map shown in Fig. 5 as a function of the depression ACC of the accelerator pedal 43 and an engine speed NE, and is calculated based on the depression ACC of the accelerator pedal 43 and the engine speed NE. The actual torque TQA is stored in the ROM 32 in advance in the form of a map shown in Fig. 6 as a function of the main fuel amount Qm and the engine speed NE, and is calculated based on the main fuel amount Qm and the engine speed NE.

On the other hand, in the example shown in Fig. 4, the required supercharge pressure PMT is stored in the ROM 32 in advance in the form of a map shown in Fig. 7 as a function of the required torque TQT and the engine speed NE, and the required torque TQT is stored in the ROM 32 in advance in the form of a map shown in Fig. 5 as the function of the depression ACC of the accelerator pedal 43 and the engine speed NE. The required torque TQT is calculated based on the depression ACC of the accelerator pedal 43 and the engine speed NE. In contrast, the actual supercharge pressure PMA is detected by the supercharge pressure sensor 41.

In short, the required torque TQT or the required supercharge pressure PMT, which is the required output representative value OPT, is calculated based on the depression ACC of the accelerator pedal 43. This allows a sure understanding of the will of the vehicle driver.

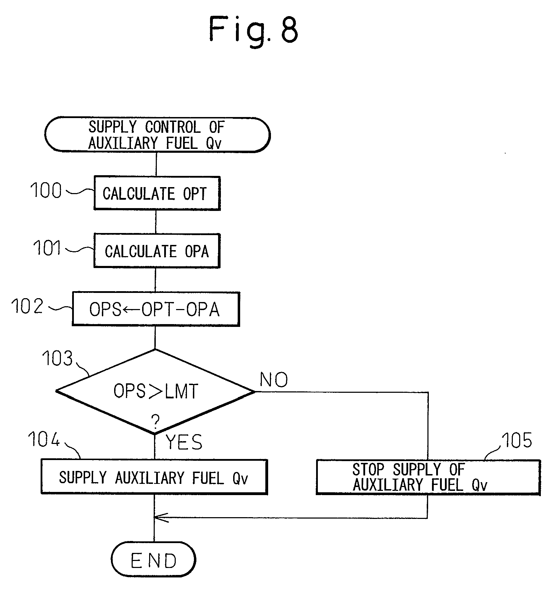

Fig. 8 shows a flowchart of a supply control routine of the auxiliary fuel Qv according to the first embodiment of the present invention. This routine is executed by an interruption every predetermined time.

Referring to Fig. 8, in step 100, the required output representative value OPT is calculated. In the following step 101, the actual output representative value OPA is calculated. In the following step 102, the output shortage representative value OPS is calculated (OPS=OPT-OPA). In the following step 103, it is judged whether the output shortage representative value OPS is larger than the permissible limit value LMT. If OPS>LMT, the process proceeds to step 104 where the auxiliary fuel Qv is supplied. On the other hand, if OPS≤LMT, the process proceeds to step 105 where the supply of the auxiliary fuel Qv is stopped.

In the example shown in Fig. 3 or Fig. 4, the engine output is represented by any one of the torque and the supercharge pressure. Alternatively, the engine output can be represented by both the torque and the supercharge pressure. In this alternative, the auxiliary fuel Qv may be supplied when the torque shortage TQS is larger than the permissible limit value LMTTQ or when the supercharge pressure shortage PMS is larger than the permissible limit value LMTPM, and the supply of the auxiliary fuel Qv may be stopped otherwise. Otherwise, the auxiliary fuel Qv may be supplied when the torque shortage TQS is larger than the permissible limit value LMTTQ and the supercharge pressure shortage PMS is larger than the permissible limit value LMTPM, and the supply of the auxiliary fuel Qv may be stopped otherwise. In addition, the shortage representative value OPS can be obtained in the form of a ratio between the actual output representative value OPA and the required output representative value OPT (OPA/OPT), instead of the difference therebetween (OPT-OPA).

Next, a second embodiment to an eighth embodiment according to the present invention will be explained.

In the first embodiment of the present invention, the auxiliary fuel Qv is supplied only when the output shortage representative value OPS is larger than the permissible limit value LMT, as mentioned above, and therefore the auxiliary fuel Qv can be used effectively. However, so long as the auxiliary fuel Qv is supplied, the fuel consumption rate or the exhaust emission amount may increase. Also, the turbocharger speed or the actual supercharge pressure PMA may exceed respective permissible upper limits.

Thus, according to the second to the eighth embodiments of the present invention, it is judged whether the increase of the exhaust energy using the auxiliary fuel Qv should be suppressed, and the supply of the auxiliary fuel Qv is prohibited or stopped when it is judged that the increase of the exhaust energy using the auxiliary fuel Qv should be suppressed.

In the second to the fourth embodiments of the present invention, a turbo state representative value TRB that represents a state or an output of the turbocharger 5 is obtained, and whether the supply of the auxiliary fuel Qv should be stopped is judged based on the turbo state representative value. Here, the turbo state representative value TRB may be at least one of the actual supercharge pressure PMA, the exhaust energy, and the turbocharger speed.

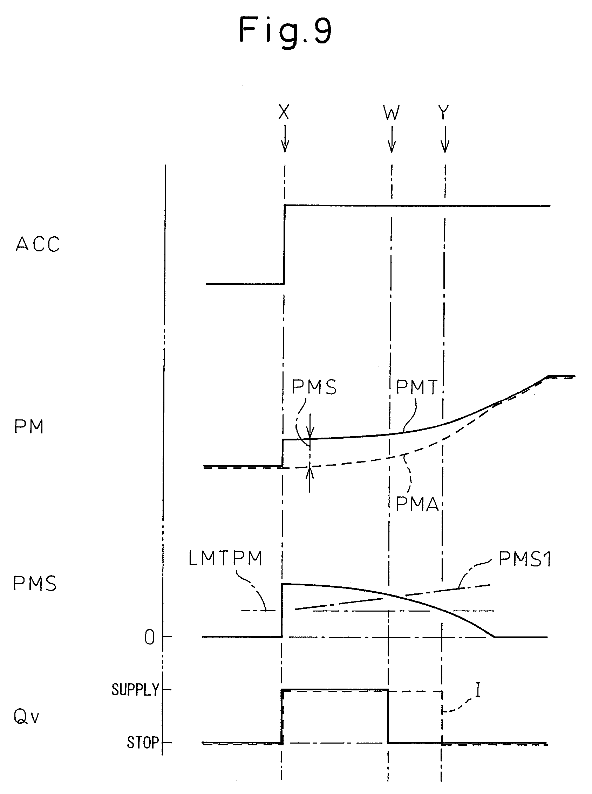

The second embodiment of the present invention will be explained with reference to Fig. 9 to Fig. 12.

In the second embodiment of the present invention, it is obtained a set value OPS1 (>0) which is defined in accordance with the turbo state representative value TRB, and the supply of the auxiliary fuel Qv is stopped when the output shortage representative value OPS is smaller than the set value OPS1. Next, the second embodiment of the present invention will be explained below, taking a case where the engine output is represented by the supercharge pressure PM as an example. Note that the engine output can be represented by the torque TQ, alternatively.

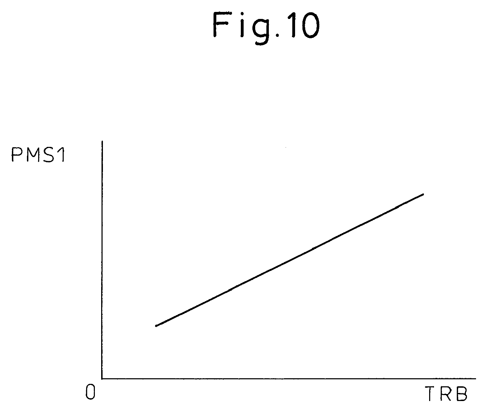

When the depression ACC of the accelerator pedal 43 is increased stepwise and thereby the supercharge pressure shortage PMS exceeds the permissible limit value LMTPM as indicated by the arrow X in Fig. 9, the supply of the auxiliary fuel Qv is started as in the first embodiment of the present invention. After the supply of the auxiliary fuel Qv is started, the supercharge pressure shortage PMS gradually becomes smaller, and a turbo state representative value TRB, such as the actual supercharge pressure PMA, gradually becomes larger. On the other hand, a set value PMS1 corresponding to the set value OPS1 becomes larger when the turbo state representative value TRB becomes large, as shown in Fig. 10. This set value PMS1 is stored in the ROM 32 in advance in the form of a map shown in Fig. 10. Then, when the supercharge pressure shortage PMS is smaller than the set value PMS1 as indicated by an arrow W in Fig. 9, the supply of the auxiliary fuel Qv is stopped or prohibited.

A broken line I in Fig. 9 shows a case according to the first embodiment of the present invention. In this case, the supply of the auxiliary fuel Qv is continued until when the supercharge pressure shortage PMS is smaller than the permissible limit value LMTPM, as indicated by the arrow Y in Fig. 9. Therefore, according to the second embodiment of the present invention, the supply of the auxiliary fuel Qv is stopped before the supercharge pressure shortage PMS is smaller than the permissible limit value LMTPM. As a result, the auxiliary fuel Qv can be used more effectively.

The reason why the second embodiment of the present invention is operated in this way is as follows. Specifically, after the supply of the auxiliary fuel Qv is turned stopped, the actual supercharge pressure PMA and the turbine speed do not reduce immediately, due to the inertia of the turbocharger 5. Therefore, if the supply of the auxiliary fuel Qv is stopped after the output shortage representative value OPS is smaller than the permissible limit value LMT, an over-supercharge may occur, that is, the supercharge pressure or the turbine speed may exceed a respective permissible upper limit. Further, in this case, the auxiliary fuel Qv is supplied excessively, which may increase the fuel consumption rate or the exhaust emission. On the other hand, when the turbo state representative value TRB is small, over-supercharge or the like may occur if the output shortage representative value OPS is relatively small. In contrast, when the turbo state representative value TRB is large, over-supercharge may occur even if the output shortage representative value OPS is relatively large.

So, the set value OPS1 that becomes larger when the turbo state representative value TRB becomes larger is set, and the supply of the auxiliary fuel Qv is stopped when the output shortage representative value OPS is smaller than the set value OPS1.

Accordingly, in general, it is judged whether the increase of the exhaust energy using the auxiliary fuel Qv should be suppressed, and the supply amount of the auxiliary fuel Qv is corrected to be reduced when it is judged that the increase of the exhaust energy using the auxiliary fuel Qv should be suppressed. The auxiliary fuel Qv is reduced to zero in the above-mentioned second embodiment of the present invention.

In the example shown in Fig. 9, the output shortage representative value OPS is larger than the set value OPS1 when the output shortage representative value OPS exceeds the permissible limit value LMT (see an arrow X) and, therefore, the supply of the auxiliary fuel Qv is started. However, there may a case where the output shortage representative value OPS is smaller than the set value OPS1 when the output shortage representative value OPS exceeds the permissible limit value LMT.

In such a case, the supply of the auxiliary fuel Qv is not started.

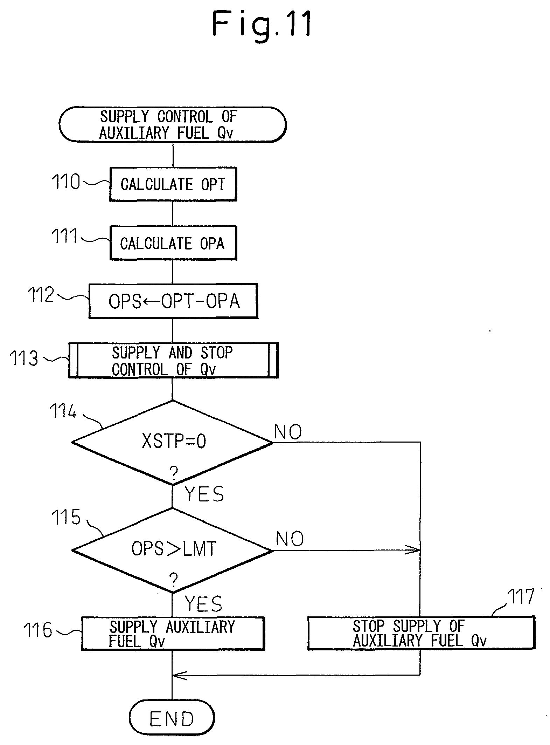

Fig. 11 is a flowchart of a supply control routine of the auxiliary fuel Qv according to the second embodiment of the present invention. This routine is executed by an interruption every predetermined time.

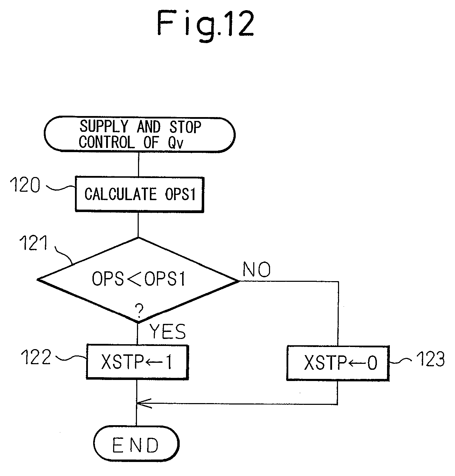

Referring to Fig. 11, in step 110, the required output representative value OPT is calculated. In the following step 111, the actual output representative value OPA is calculated. In the following step 112, the output shortage representative value OPS is calculated (OPS=OPT-OPA). In the following step 113, a supply and stop control routine of the auxiliary fuel Qv, which is shown in Fig. 12, is executed.

Referring to Fig. 12, in step 120, the set value OPS1 is calculated. In the following step 121, it is judged whether the output shortage representative value OPS is smaller than the set value OPS1. If OPS<OPS1, the process proceeds to step 122 where a flag XSTP is set (XSTP=1). This flag XSTP is set when the supply of the auxiliary fuel Qv is to be stopped or suppressed, and is reset when the supply of the auxiliary fuel Qv is to be permitted. On the other hand, if OPS≥OPS1, the process proceeds to step 123 where the flag XSTP is reset (XSTP=0).

Referring to Fig. 11 again, in the following step 114, it is judged whether the flat XSTP is being reset, that is, whether the supply of the auxiliary fuel Qv is permitted. If XSTP=0, that is, when the supply of the auxiliary fuel Qv is permitted, the process proceeds to step 115 where it is judged whether the output shortage OPS is larger than the permissible limit value LMT. If OPS>LMT, the process proceeds to step 116 where the auxiliary fuel Qv is supplied. In contrast, if XSTP=1 in step 114, that is, if the supply of the auxiliary fuel Qv is to be stopped, or if OPS≤LMT, the process proceeds to step 117 where the supply of the auxiliary fuel Qv is stopped.

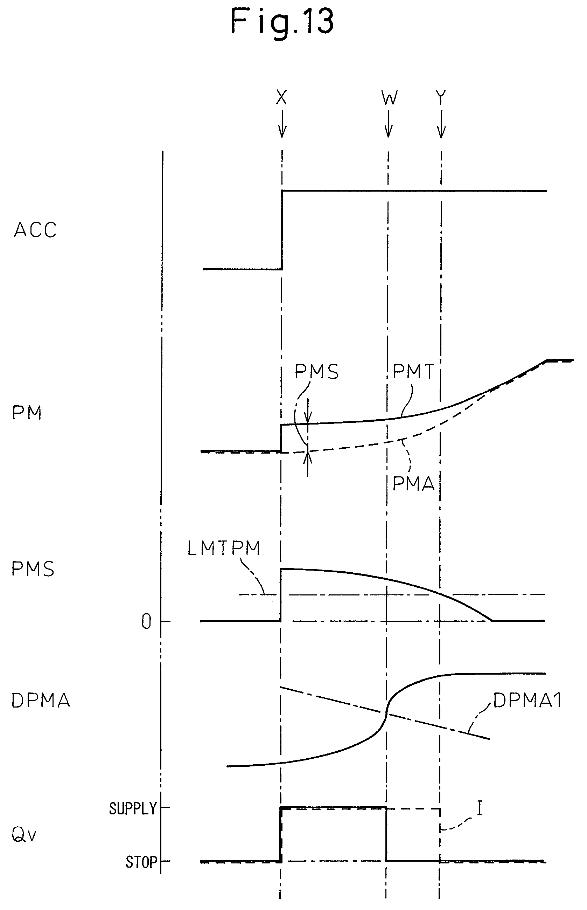

Next, the third embodiment of the present invention will be explained with reference to Fig. 13 to Fig. 15.

A configuration of the third embodiment of the present invention is different from that of the second embodiment in that a change rate DOPA of the actual output representative value OPA, and a set value DOPA1 (>0) that is determined according to the turbo state representative value TRB, are obtained, and the supply of the auxiliary fuel Qv is stopped when the change rate DOPA of the actual output representative value is larger than the set value DOPA1. Next, the third embodiment of the present invention will be explained below, taking a case where the engine output is represented by the supercharge pressure PM as an example.

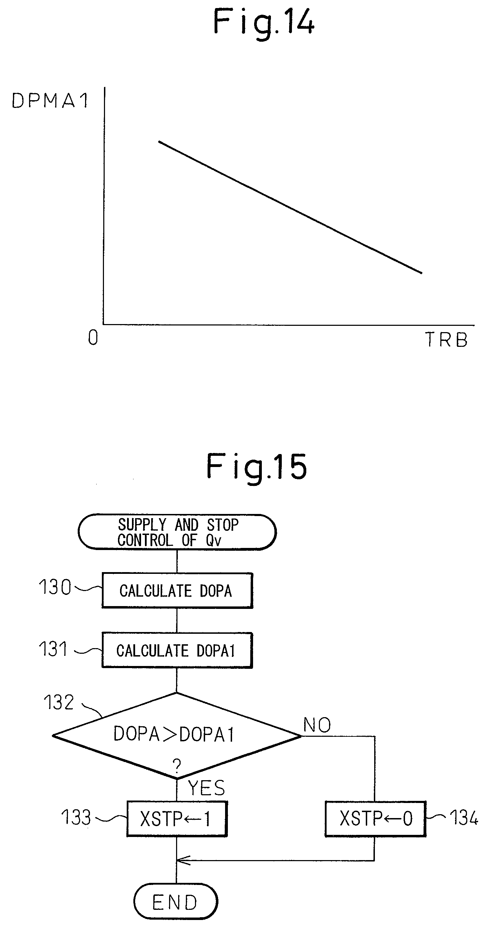

As indicated by the arrow X in Fig. 13, when the depression ACC of the accelerator pedal 43 is increased stepwise and thereby the supercharge pressure shortage PMS exceeds the permissible limit value LMTPM, the supply of the auxiliary fuel Qv is started as in the first embodiment. After the supply of the auxiliary fuel Qv is started, the change rate DPMA of the actual supercharge pressure gradually becomes larger. On the other hand, the set value DPMA1 corresponding to the set value DOPA1 gradually becomes smaller when the turbo state representative value TRB becomes larger as shown in Fig. 14. This set value DPMA1 is stored in the ROM 32 in advance in the form of a map as shown in Fig. 14. When the change rate DPMA of the actual supercharge pressure becomes larger than the set value DPMA1 as indicated by the arrow W in Fig. 13, the supply of the auxiliary fuel Qv is stopped.

Also in the third embodiment of the present invention, the supply of the auxiliary fuel Qv is stopped before the supercharge pressure shortage PMS is smaller than the permissible limit value LMTPM. Therefore, the auxiliary fuel can be used more effectively.

In this case, when the turbo state representative value TRB is small, over-supercharge may occur if the change rate DOPA of the actual output representative value is relatively large, that is, the slope of the increase of the actual output representative value OPA is large. On the other hand, when the turbo state representative value TRB is large, over-supercharge may occur even if the change rate DOPA of the actual output representative value is relatively small, that is, the slope of the actual output representative value OPA is slight. So, the set value DOPA1 that becomes smaller when the turbo state representative value TRB becomes larger is set, and the supply of the auxiliary fuel Qv is stopped when the change rate DOPA of the actual output representative value is larger than the set value DOPA1.

Fig. 15 is a flowchart of a supply and stop control routine of the auxiliary fuel Qv according to the third embodiment of the present invention. This routine is executed in step 113 in Fig. 11, for example.

Referring to Fig. 15, in step 130, the change rate DOPA of the actual output representative value is calculated. In the following step 131, the set value DOPA1 is calculated. In the following step 132, it is judged whether the change rate DOPA1 of the actual output representative value is larger than the set value DOPA1. If DOPA>DOPA1, the process proceeds to step 133 where the flag XSTP is set (XSTP=1). Therefore, the supply of the auxiliary fuel Qv is stopped at this time. On the other hand, if DOPA≤DOPA1, the process proceeds to step 134 where the flag XSTP is reset (XSTP=0). Accordingly, the supply of the auxiliary fuel Qv is permitted at this time.

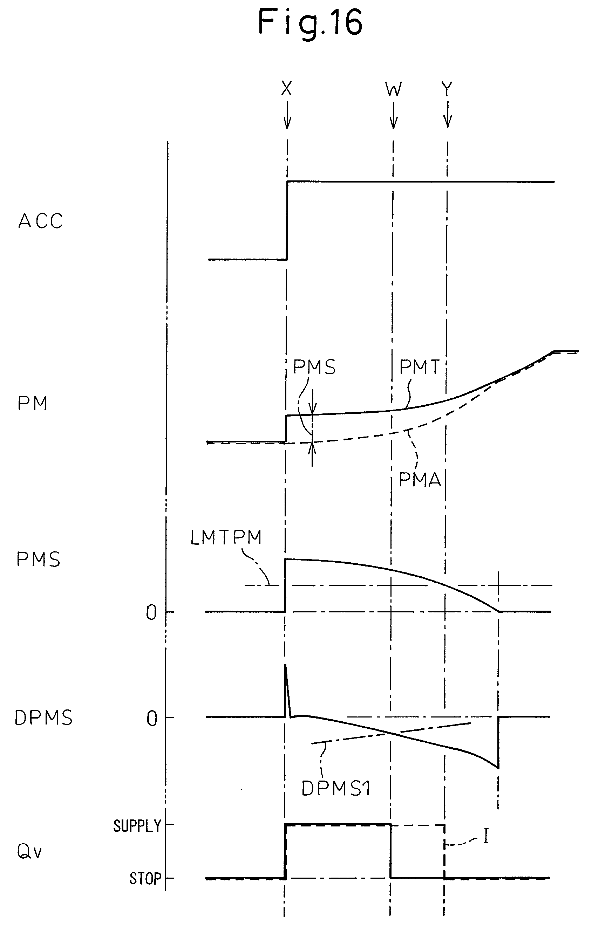

Next, the fourth embodiment of the present invention will be explained with reference to Fig. 16 to Fig. 18.

A configuration of the fourth embodiment of the present invention is different from that of the second embodiment in that a change rate DOPS of the actual shortage OPS, and a set value DOPS1 (<0) that is determined according to the turbo-state representative value TRB, are obtained, and the supply of the auxiliary fuel Qv is stopped when the change rate DOPS of the output shortage representative value is smaller than the set value DOPS1. Next, the fourth embodiment of the present invention will be explained below, taking again a case where the engine output is represented by the supercharge pressure PM as an example.

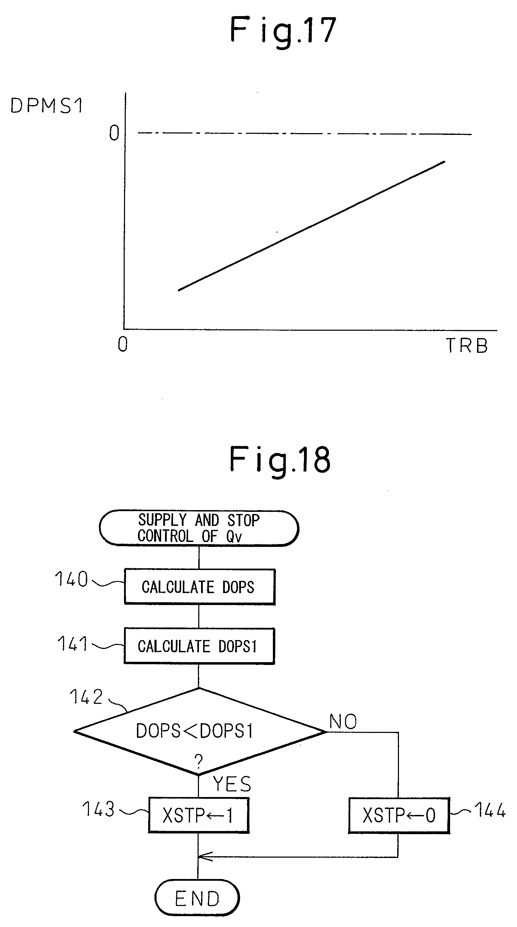

As indicated by the arrow X in Fig. 16, when the depression ACC of the accelerator pedal 43 is increased stepwise and thereby the supercharge pressure shortage PMS exceeds the permissible limit value LMTPM, the supply of the auxiliary fuel Qv is started as in the first embodiment. After the supply of the auxiliary fuel Qv is started, the change rate DPMS of the supercharge pressure shortage once increases and then becomes smaller from zero. On the other hand, the set value DPMS1 corresponding to the set value DOPS1 gradually becomes larger when the turbo state representative value TRB becomes larger as shown in Fig. 17. This set value DPMS1 is stored in the ROM 32 in advance in the form of a map as shown in Fig. 17. When the change rate DPMS of the supercharge pressure shortage becomes smaller than the set value DPMS1 as indicated by the arrow W in Fig. 16, the supply of the auxiliary fuel Qv is stopped.

When the turbo state representative value TRB is small, over-supercharge may occur if the change rate DOPS of the output shortage representative value is relatively small, that is, the slope of the decrease of the output shortage representative value OPS is large. On the other hand, when the turbo state representative value TRB is large, over-supercharge may occur even if the change rate DOPS of the output shortage representative value is relatively large, that is, the slope of the output shortage representative value OPS is slight. So, the set value DOPA1 that becomes larger when the turbo state representative value TRB becomes larger is set, and the supply of the auxiliary fuel Qv is stopped when the change rate DOPS of the output shortage representative value is smaller than the set value DOPS1.

Fig. 18 is a flowchart of a supply and stop control routine of the auxiliary fuel Qv according to the fourth embodiment of the present invention. This routine is executed in step 113 in Fig. 11, for example.

Referring to Fig. 18, in step 140, the change rate DOPS of the output shortage representative value is calculated. In the following step 141, the set value DOPS1 is calculated. In the following step 142, it is judged whether the change rate DOPS of the output shortage representative value is smaller than the set value DOPS1. If DOPS<DOPS1, the process proceeds to step 143 where the flag XSTP is set (XSTP=1). Therefore, the supply of the auxiliary fuel Qv is stopped at this time. On the other hand, if DOPS≥DOPS1, the process proceeds to step 144 where the flag XSTP is reset (XSTP=0). Accordingly, the supply of the auxiliary fuel Qv is stopped at this time.

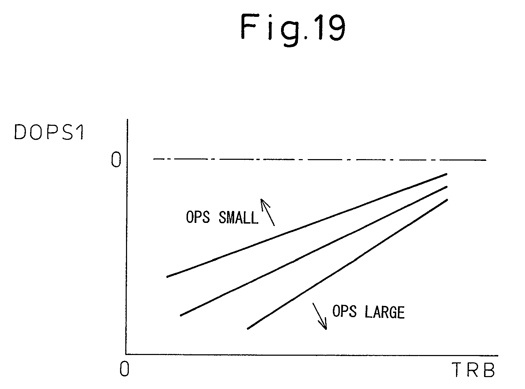

Fig. 19 shows an alternative embodiment of the set value DOPS1. In this example, the set value DOPA1 becomes larger when the turbo state representative value TRB becomes larger, and becomes larger when the output shortage representative value OPS becomes smaller.

Accordingly, in general, the set value DOPS1 is set according to the turbo state representative value TRB and the output shortage representative value OPS, the supply of the auxiliary fuel Qv is stopped when the change rate DOPS of the output shortage representative value is smaller than the set value DOPS1. In this respect, the set value DOPS1 in the fourth embodiment of the present invention described with reference to Fig. 17 is set according only to the turbo state representative value TRB regardless of the output shortage representative value OPS.

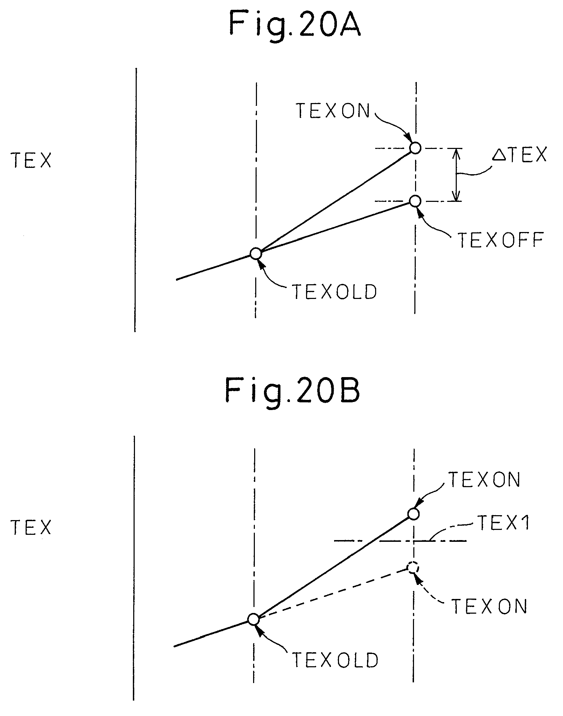

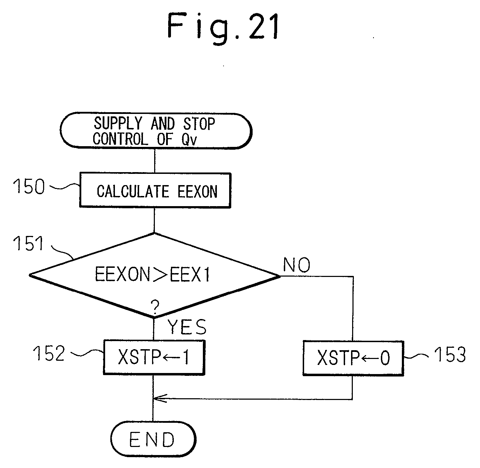

Next, the fifth embodiment of the present invention will be explained with reference to Figs. 20A, 20B, and 21.

When the auxiliary fuel Qv is supplied thereby increasing the exhaust energy, the temperatures of the exhaust system elements such as the exhaust manifold 10 and the exhaust turbine 5t of the turbocharger 5 also increase. Therefore, if the exhaust energy is excessively increased, durability or reliability of the exhaust system elements may deteriorate.

So, in the fifth embodiment of the present invention, the exhaust energy EEXON, assuming that the auxiliary fuel Qv is supplied, is predicted, and the supply of the auxiliary fuel Qv is stopped when the predicted exhaust energy EEXON is larger than a preset amount EEX1. The configuration of the fifth embodiment is different from those of the second through fourth embodiments in this point.

Next, the fifth embodiment of the present invention will be explained below, taking a case where the exhaust energy is represented by the temperature TEX of the exhaust gas discharged from the combustion chamber and entering the exhaust turbine 5t as an example. Note that the exhaust energy may be represented by, for example, the heat amount of the exhaust gas that flows into the exhaust turbine 5t.

Referring to Fig. 20A, TEXOLD represents the temperature TEX of the exhaust gas after the previous combustion cycle has been completed. In the example shown in Fig. 20A, assuming that the supply of the auxiliary fuel Qv is stopped in the next combustion cycle, the temperature TEX of the exhaust gas after the next combustion cycle is completed will be TEXOFF. In contrast, the temperature TEX of the exhaust gas after the next combustion cycle is completed will be TEXON assuming that the auxiliary fuel Qv is supplied in the next combustion cycle. This TEXON is higher than TEXOFF by an increment ΔTEX.

In this case, the temperature TEXOFF of the exhaust gas assuming that the supply of the auxiliary fuel Qv is stopped in the next combustion cycle depends on the main fuel Qm (see Fig. 2), and can be predicted based on, for example, a temperature TEXOLD of the exhaust gas in the previous combustion cycle and an injection parameter of the main fuel Qm such as an injection amount or an injection timing. Here, the temperature TEXOLD of the exhaust gas in the previous combustion cycle can be obtained based on the engine operation state, such as the actual supercharge pressure PMA, the intake air amount, the main injection amount Qm, a pressure in the exhaust manifold 10, and an EGR ratio (=EGR gas amount/gas amount in the cylinder). On the other hand, the increment ΔTEX depends on the auxiliary fuel Qv, and can be predicted based on an injection parameter of the auxiliary fuel Qv, such as an injection amount or an injection timing.

Thus, in the fifth embodiment of the present invention, the temperature TEXOFF of the exhaust gas assuming that the supply of the auxiliary fuel Qv is stopped in the next combustion cycle, and the increment ΔTEX, are predicted, and the temperature TEXON of the exhaust gas assuming that the auxiliary fuel Qv is supplied in the next combustion cycle is predicted by adding the increment ΔTEX to the temperature TEXOFF of the exhaust gas (TEXON=TEXOFF+ΔTEX).

When the thus predicted temperature TEXON of the exhaust gas is higher than a set temperature TEX1, which may be constant, corresponding to the set amount EEX1 as indicated by a solid line in Fig. 20B, the supply of the auxiliary fuel Qv is stopped in the next combustion cycle. In contrast, when the predicted temperature TEXON of the exhaust gas is lower than the set temperature TEX1 as indicated by a broken line in Fig. 20B, the auxiliary fuel Qv is supplied in the next combustion cycle. As a result, excessive increase of the temperature TEX of the exhaust gas can be prevented.

In other words, in general, exhaust energy EEXOFF assuming that the supply of the auxiliary fuel Qv is stopped in the next combustion cycle is predicted, an increment ΔEEX of the exhaust energy by the auxiliary fuel Qv is predicted, the exhaust energy EEXON assuming that the auxiliary fuel Qv is supplied in the next combustion cycle is predicted based on EEXOFF and ΔEEX, and the supply of the auxiliary fuel Qv is stopped in the next combustion cycle when the predicted exhaust energy EEXOFF is larger than the set amount EEX1.

Fig. 21 is a flowchart of a supply and stop control routine of the auxiliary fuel Qv according to the fifth embodiment of the present invention. This routine is executed in step 113 in Fig. 11, for example.

Referring to Fig. 21, in step 150, the exhaust energy EEXON assuming that the auxiliary fuel Qv is supplied in the next combustion cycle is calculated. In the following step 151, it is judged whether the predicted exhaust energy EEXON is smaller than the permissible value EEX1. If EEXON>EEX1, the process proceeds to step 152 where the flag XSTP is set (XSTP=1). Therefore, the supply of the auxiliary fuel Qv is stopped at this time. In contrast, if EEXON≤EEX1, the process proceeds to step 153 where the flag XSTP is reset (XSTP=0). Accordingly, the supply of the auxiliary fuel Qv is permitted at this time.

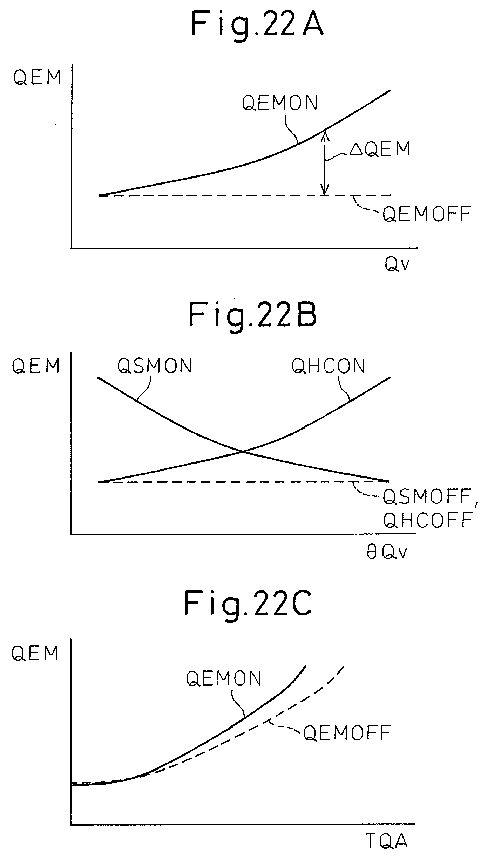

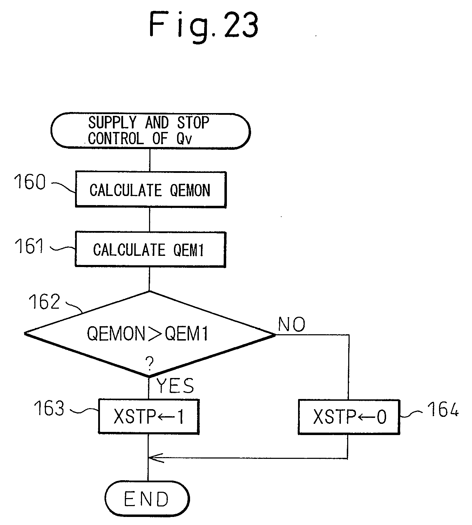

Next, the sixth embodiment of the present invention will be explained with reference to Figs. 22A, 22B, 22C, and 23.

As described above, when the auxiliary fuel Qv is supplied, the exhaust emission amount, that is, the amount of hydrocarbon, particulates, or smoke contained in the exhaust gas, increases in comparison with a case when the auxiliary fuel Qv is not supplied.

Particularly, focusing on the amount of the particulates contained in the exhaust gas, the increase rate of the collected amount of particulates on the particulate filter 13 when the auxiliary fuel Qv is supplied is higher than that when the supply of the auxiliary fuel Qv is stopped. On the other hand, in the internal combustion engine shown in Fig. 1, the additional fuel Qa (see Fig. 2) is supplied each time when the collected amount of particulates on the particulate filter 13 reaches a set amount which may be constant. Accordingly, the frequency of the supply of the additional fuel Qa when the auxiliary fuel Qv is supplied is higher than that when the supply of the auxiliary fuel Qv is stopped. Therefore, the fuel consumption rate may increase further.

So, in the sixth embodiment of the present invention, the exhaust emission amount QEMON assuming that the auxiliary fuel Qv is supplied is predicted, and the supply of the auxiliary fuel Qv is stopped when the predicted exhaust emission amount QEMON is larger than the preset amount QEM1. The configuration of the sixth embodiment is different from those of the second to the fifth embodiments in this point.

It has been found from experiments that the exhaust emission amount QEM depends on the injection parameter of the auxiliary fuel Qv and the atmosphere in the cylinder to which the auxiliary fuel Qv is supplied. Specifically, as shown in Fig. 22A, the exhaust emission amount QEMON when the auxiliary fuel Qv is supplied increases when the auxiliary fuel amount Qv increases, and an increment $\Delta$QEM of the exhaust emission amount QEMON with respect to the exhaust emission amount QEMOFF when the supply of the auxiliary fuel Qv is stopped also increases when the auxiliary fuel amount Qv increases. Also, as shown in Fig. 22B, a smoke amount QSMON when the auxiliary fuel Qv is supplied increases when an injection timing $\theta$Qv of the auxiliary fuel Qv is retarded, and an increment of the smoke amount QSMON with respect to the smoke amount QSMOFF when the supply of the auxiliary fuel Qv is stopped also increases when the injection timing $\theta$Qv is retarded. In addition, a hydrocarbon amount QHCON when the auxiliary fuel Qv is supplied increases when the injection timing $\theta$Qv of the auxiliary fuel Qv is advanced, and an increment of the hydrocarbon amount QHCON with respect to a hydrocarbon amount QHCOFF when the supply of the auxiliary fuel Qv is stopped also increases when the injection timing $\theta$Qv is advanced. As can be seen from Fig. 22C, the exhaust emission amount QEMON when the auxiliary fuel Qv is supplied increases when the actual torque TQA increases, and an increment of the exhaust emission amount QEMON with respect to the exhaust emission amount QEMOFF when the supply of the auxiliary fuel Qv is stopped also increases when the actual torque TQA increases. Here, the actual torque depends on the main fuel Qm, and represents the atmosphere in the cylinder at the timing of the supply of the auxiliary fuel Qv.

Note that, in Fig. 22A, the injection timing $\theta$Qv of the auxiliary fuel Qv and the actual torque TQA are maintained at constant levels. In Fig. 22B, the auxiliary fuel amount Qv and the actual torque TQA are maintained at constant levels. In Fig. 22C, the auxiliary fuel amount Qv and the injection timing $\theta$Qv of the auxiliary fuel Qv are maintained at constant levels.

In this case, the exhaust emission amount QEMOFF, assuming that the supply of the auxiliary fuel Qv is stopped in the next combustion cycle, depends on the main fuel Qm, and can be predicted based on the engine speed, the actual torque, the EGR ratio, the intake air amount, the intake air temperature, or the like. On the other hand, the increment $\Delta$QEM depends on the auxiliary fuel Qv, and can be predicted based on the injection parameter of the auxiliary fuel Qv such as the auxiliary fuel amount Qv and the injection timing $\theta$Qv.

So, in the sixth embodiment of the present invention, the exhaust emission amount QEMOFF, assuming that the supply of the auxiliary fuel Qv is stopped in the next combustion cycle, and the increment $\Delta$QEM are predicted and the exhaust emission amount QEMON, assuming that the auxiliary fuel Qv is supplied in the next combustion cycle, is predicted by adding the increment $\Delta$QEM to the exhaust emission amount QEMOFF

$$(QEMON = QEMOFF + \Delta QEM).$$

When the thus predicted exhaust emission amount QEMON is larger than the set amount QEM1, the supply of the auxiliary fuel Qv is stopped in the next combustion cycle. When the predicted exhaust emission amount QEMON is smaller than the set amount QEM1, the auxiliary fuel Qv is supplied in the next combustion cycle. In this case, when at least one of the amounts of hydrocarbon, particulates, and smoke is larger than the corresponding set amounts, the supply of the auxiliary fuel Qv may be stopped.

While the set amount QEM1 may be set constant, the set amount QEM1 is set depending on the engine operation state according to the sixth embodiment of the present invention. For example, the set amount QEM1 is set based on the engine speed, the actual torque TQA, and the intake air amount.

Fig. 23 is a flowchart of a supply and stop control routine of the auxiliary fuel Qv according to the sixth embodiment of the present invention. This routine is executed in step 113 in Fig. 11, for example.

Referring to Fig. 23, in step 160, the exhaust emission amount QEMON assuming that the auxiliary fuel Qv is supplied in the next combustion cycle is calculated. In the following step 161, the set amount QEM1 is calculated. In the following step 162, it is judged whether the predicted exhaust emission amount QEMON is larger than the set amount QEM1. If QEMON>QEM1, the process proceeds to step 163 where the flag XSTP is set (XSTP=1). Therefore, the supply of the auxiliary fuel Qv is stopped at this time. In contrast, if QEMON<QEM1, the process proceeds to step 164 where the flag XSTP is reset (XSTP=0). Accordingly, the supply of the auxiliary fuel Qv is permitted at this time.

In this case, QEMON represents the exhaust emission amount per combustion cycle assuming that the auxiliary fuel Qv is supplied. Therefore, QEMON can be considered to represent the increase or change rate of the exhaust emission amount assuming that the auxiliary fuel Qv is supplied. Accordingly, in the sixth embodiment, the supply of the auxiliary fuel Qv is stopped when the change rate of the exhaust emission amount, assuming that the auxiliary fuel Qv is supplied, is larger than the set value.

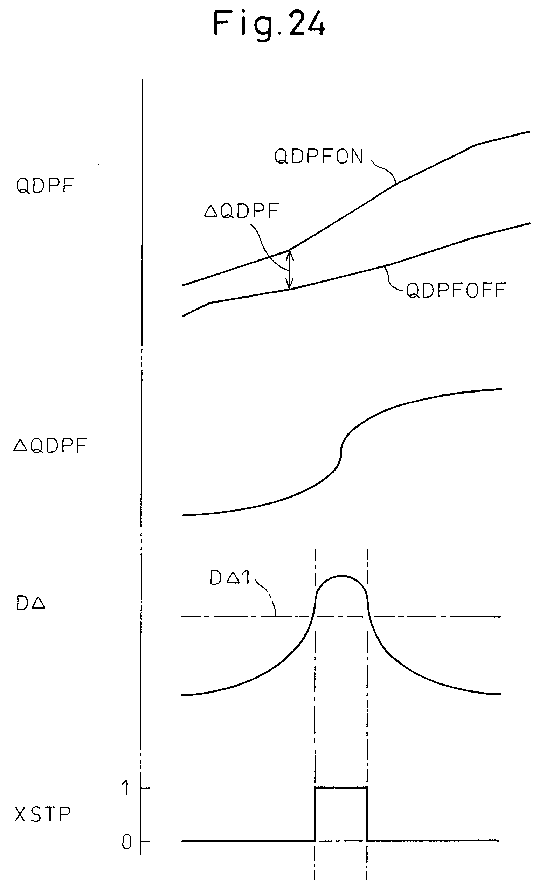

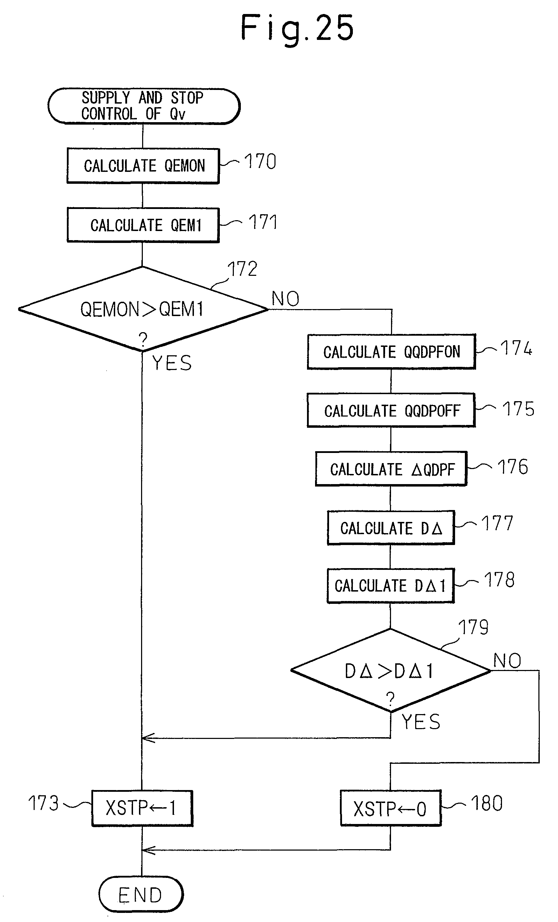

Next, the seventh embodiment of the present invention will be explained with reference to Figs. 24 and 25.

Referring to Fig. 24, QDPFON represents a collected amount of particulates on the particulate filter 13, assuming that the auxiliary fuel Qv is supplied, QDPFOFF represents a collected amount of particulates on the particulate filter 13, assuming that the supply of the auxiliary fuel Qv is stopped, and ΔQDPF represents an increase of QDPFON with respect to QDPFOFF (=QDPFON-QDPFOFF). As can be seen from Fig. 24, the collected particulates amount QDPFON, assuming that the auxiliary fuel Qv is supplied, and the collected particulates amount QDPFOFF, assuming that the supply of the auxiliary fuel Qv is stopped, both increase along lapse of time. The increment ΔQDPF also increases along lapse of time.

In the above-mentioned sixth embodiment of the present invention, the supply of the auxiliary fuel Qv is stopped when the increase or change rate QDPFON of the collected amount of particulates assuming that the auxiliary fuel Qv is supplied is large, and is permitted when the increase rate QDPFON of the collected amount of particulates is small. However, even when the increase rate of the collected amount of particulates QDPFON is small but if the increase of the collected amount of particulates QDPFON is mainly due to the auxiliary fuel Qv, the supply of the auxiliary fuel Qv should be stopped.

On the other hand, the increment ΔQDPF represents the influence of the auxiliary fuel Qv on the collected amount of particulates QDPFON. Therefore, when the increase or change rate of the increment ΔQDPF is large, it can be said that the increase rate of the collected amount of particulates QDPFON becomes large due to the auxiliary fuel Qv.

So, in the seventh embodiment of the present invention, the change rate DΔ of the increment ΔQDPF is obtained when the exhaust emission amount QEM is smaller than the set amount QEM1 in the sixth embodiment and, as shown in Fig. 24, the flag XSTP is set (XSTP=1) and the supply of the auxiliary fuel Qv is stopped when the change rate DΔ of the increment is larger than the preset value DΔ1. In contrast, when the change rate DΔ of the increment is smaller than the set value DΔ1, the flag XSTP is reset (XSTP=0) and the supply of the auxiliary fuel Qv is permitted. The configuration of the seventh embodiment is different from that of the sixth embodiment in this point.

While the set value DΔ1 can be set constant, the set amount QEM1 is set depending on the engine operation state according to the seventh embodiment of the present invention. Specifically, the set amount QEM1 is set based on the engine speed, the actual torque TQA and the intake air amount, for example.

Fig. 25 is a flowchart of a supply and stop control routine of the auxiliary fuel Qv according to the seventh embodiment of the present invention. This routine is executed in step 113 in Fig. 11, for example.

Referring to Fig. 25, in step 170, the exhaust emission amount QEMON assuming that the auxiliary fuel Qv is supplied in the next combustion cycle is calculated. In the following step 171, the set amount QEM1 is calculated. In step 172, it is judged whether the predicted exhaust emission amount QEMON is larger than the set amount QEM1. If QEMON>QEM1, the process proceeds to step 173 where the flag XSTP is set (XSTP=1). Therefore, the supply of the auxiliary fuel Qv is stopped at this time. In contrast, if QEMON≤QEM1, the process proceeds to step 174 where a collected amount of particulates QQDPFON when the vehicle runs through a reference period such as a constant time or distance, assuming that the auxiliary fuel Qv is supplied, is calculated. In the following step 175, the collected amount of particulates QQDPFOFF when the vehicle runs through the reference period assuming that the supply of the auxiliary fuel Qv is stopped, is calculated. Note that in the case where the exhaust emission amount QEMON calculated in step 170 and the exhaust emission amount QEMOFF are the amounts of particulates, the collected particulates amounts QQDPFON and QQDPFOFF are obtained by accumulating QEMON and QEMOFF, respectively, through the reference period. In the following step 176, an increment ΔQDPF (=QQDPFON-QQDPFOFF) is calculated. In the following step 177, the change rate DΔ of the increment is calculated. In the following step 178, the set value DΔ1 is calculated. In the following step 179, it is judged whether the change rate DΔ of the increment is larger than the set value DΔ1. If DΔ>DΔ1, the process proceeds to step 173 where the flag XSTP is set (XSTP=1). Therefore, the supply of the auxiliary fuel Qv is stopped at this time. In contrast, if DΔ≤DΔ1, the process proceeds to step 180 where the flag XSTP is reset (XSTP=0). Therefore, the supply of the auxiliary fuel Qv is permitted at this time.

Note that, in the seventh embodiment, it is judged whether the supply of the auxiliary fuel Qv is to be stopped based on the change rate DΔ of the increment, when the exhaust emission amount QEM is smaller than the set amount QEM1. Alternatively, the judgment whether the supply of the auxiliary fuel Qv is to be stopped based on the change rate DΔ of the increment may be executed regardless of the exhaust emission amount QEM.

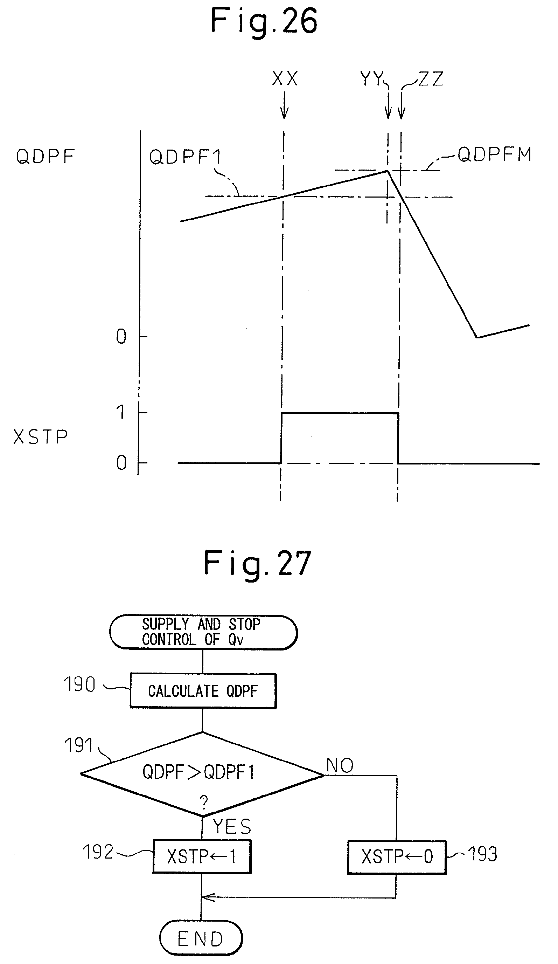

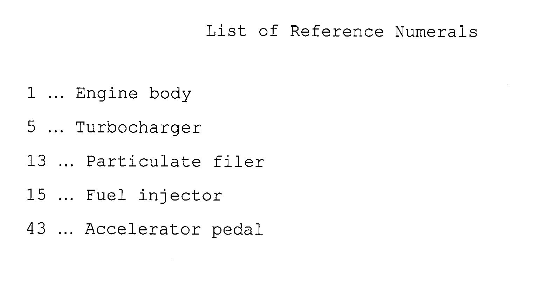

Next, the eighth embodiment of the present invention will be explained with reference to Figs. 26 and 27.

When the auxiliary fuel Qv is supplied and thereby the exhaust gas temperature rises, the temperature of the particulate filter 13 also rises. In this case, if a relatively large amount of particulates are collected on the particulate filter 13, the large amount of particulates may be abnormally combusted which may lead melting of the particulate filter 13.

So, in the eighth embodiment of the present invention, when the collected amount of particulates QDPF on the particulate filter 13 is larger than the preset amount QDPF1, the supply of the auxiliary fuel Qv is stopped. The configuration of the eighth embodiment is different from those of the second to the fifth embodiments in this point.

Specifically, as shown in Fig. 26, when the collected amount of particulates QDPF exceeds the set amount QDPF1, the flag XSTP is set as indicated by an arrow XX (XSTP=1), and the supply of the auxiliary fuel Qv is stopped. After that, when the collected amount of particulates QDPF exceeds a constant amount QDPFM, the temperature increase control is started and, thereby, the collected amount of particulates QDPF is gradually reduced. After that, when the collected amount of particulates QDPF is smaller than the set amount QDPF1 as indicated by an arrow ZZ, the flag XSTP is reset (XSTP=0), and the supply of the auxiliary fuel Qv is permitted.

Fig. 27 is a flowchart of a supply and stop control routine of the auxiliary fuel Qv according to the eighth embodiment of the present invention. This routine is executed in step 113 in Fig. 11, for example.

Referring to Fig. 27, in step 190, the collected amount of particulates QDPF on the particulate filter 13 is calculated. In the following step 191, it is judged whether the collected amount of particulates QDPF is larger than the set amount QDPF1. If QDPF>QDPF1, the process proceeds to step 192 where the flag XSTP is set (XSTP=1). Therefore, the supply of the auxiliary fuel Qv is stopped at this time. In contrast, if QDPF≤QDPF1, the process proceeds to step 193 where the flag XSTP is reset (XSTP=0). Accordingly, the supply of the auxiliary fuel Qv is permitted at this time.

According to the present invention, the auxiliary fuel can be used effectively to increase the exhaust energy.

## Claims

1. A fuel supply control device for an internal combustion engine having an exhaust supercharger, the fuel supply control device comprising:

   a fuel injector that injects fuel into a cylinder directly;
   judging means for judging whether a shortage of an actual engine output against a required output is larger than a predetermined permissible limit; and
   increasing means for supplying auxiliary fuel from the fuel injector at a power stroke after main fuel is supplied, to temporarily increase an exhaust energy, which is energy of the exhaust gas flowing into the exhaust supercharger, when the judging means judges that the output shortage is larger than the permissible limit,

   the fuel supply control device further comprising:

   suppressing means for judging whether an increase of the exhaust energy using the auxiliary fuel is to be suppressed, and for reducing a supply amount of the auxiliary fuel when it is judged that the increase of the exhaust energy using the auxiliary fuel is to be suppressed,
   wherein the suppressing means comprises an exhaust emission amount predicting means for predicting an exhaust emission amount assuming the auxiliary fuel is supplied, and wherein the suppressing means judges that the increase of the exhaust energy using the auxiliary fuel is to be suppressed when the predicted exhaust emission amount is larger than a set exhaust emission amount determined in advance, and **characterized in that**
   a particulate filter for collecting particulates contained in the exhaust gas is disposed in an exhaust path of the internal combustion engine, wherein the suppressing means comprises means for, when the predicted exhaust emission amount is smaller than the set exhaust emission amount, obtaining an increment of the collected amount of particulates on the particulate filter assuming that the supply of the auxiliary fuel is stopped and for also obtaining a change rate of the increment, and wherein the suppressing means judges that the increase of the exhaust energy using the auxiliary fuel is to be suppressed when the obtained change rate of the increment is larger than a set change rate determined in advance.

2. A fuel supply control device for an internal combustion engine having an exhaust supercharger, the fuel supply control device comprising:

a fuel injector that injects fuel into a cylinder directly;

judging means for judging whether a shortage of an actual engine output against a required output is larger than a predetermined permissible limit; and

increasing means for supplying auxiliary fuel from the fuel injector at a power stroke after main fuel is supplied, to temporarily increase an exhaust energy, which is energy of the exhaust gas flowing into the exhaust supercharger, when the judging means judges that the output shortage is larger than the permissible limit,

the fuel supply control device further comprising:

suppressing means for judging whether an increase of the exhaust energy using the auxiliary fuel is to be suppressed, and for reducing a supply amount of the auxiliary fuel when it is judged that the increase of the exhaust energy using the auxiliary fuel is to be suppressed, **characterized in that**
a particulate filter for collecting particulates contained in the exhaust gas is disposed in the exhaust path of the internal combustion engine, wherein the suppressing means comprises means for obtaining an increment of the collected amount of particulates on the particulate filter assuming that the supply of the auxiliary fuel is supplied, with respect to that assuming that the supply of the auxiliary fuel is stopped, and for also obtaining a change rate of the increment, and wherein the suppressing means judges that the increase of the exhaust energy using the auxiliary fuel is to be suppressed when the obtained change rate of the increment is larger than a set rate determined in advance.

3. The fuel supply control device for an internal combustion engine according to claim 2, wherein the set rate is set depending on an engine operation state.

4. A fuel supply control device for an internal combustion engine having an exhaust supercharger, the fuel supply control device comprising:

a fuel injector that injects fuel into a cylinder directly;

judging means for judging whether a shortage of an actual engine output against a required output is larger than a predetermined permissible limit; and

increasing means for supplying auxiliary fuel from the fuel injector at a power stroke after main fuel is supplied, to temporarily increase an exhaust energy, which is energy of the exhaust gas flowing into the exhaust supercharger, when the judging means judges that the output shortage is larger than the permissible limit,

the fuel supply control device further comprising:

suppressing means for judging whether an increase of the exhaust energy using the auxiliary fuel is to be suppressed, and for reducing a supply amount of the auxiliary fuel when it is judged that the increase of the exhaust energy using the auxiliary fuel is to be suppressed, **characterized in that**
a particulate filter for collecting particulates contained in the exhaust gas is disposed in the exhaust path of the internal combustion engine, wherein the suppressing means comprises means for obtaining the collected amount of particulates on the particulate filter, and wherein the suppressing means judges that the increase of the exhaust energy using the auxiliary fuel is to be suppressed when the collected particulate amount is larger than or exceeds a set particulate value determined in advance.

5. The fuel supply control device for an internal combustion engine according to anyone of claims 1 to 4, wherein, when the suppressing means judges that the increase of the exhaust energy using the auxiliary fuel is to be suppressed, the suppressing means stops the supply of the auxiliary fuel, regardless of whether the output shortage is larger than the permissible limit.

6. The fuel supply control device for an internal combustion engine according to anyone of claims 1 to 4, wherein the increasing means stops the increase of the exhaust energy using the auxiliary fuel when it is judged that the output shortage is smaller than the permissible limit.

7. The fuel supply control device for an internal combustion engine according to anyone of claims 1 to 4, wherein the judging means obtains a required output representative value that represents the required output and an actual output representative value that represents the actual engine output, respectively, and obtains an output shortage representative value that represents the output shortage by subtracting the actual output representative value from the required output representative value, and wherein the judging means judges that the output shortage is larger than the permissible limit when the output shortage representative value is larger than a set value determined in advance.

8. The fuel supply control device for an internal combustion engine according to anyone of claims 1 to 4, wherein each of the required output and the actual engine output is represented by the required and actual torques obtained based on a depression of an accelerator pedal and/or the required and actual supercharge pressures obtained based on a depression of an accelerator pedal.

9.  The fuel supply control device for an internal combustion engine according to anyone of claims 1 to 4, wherein the internal combustion engine is internal combustion engine of a compression-ignition type.

**Patentansprüche**

1.  Kraftstoffzuführsteuerungsvorrichtung für eine Brennkraftmaschine mit einem Abgaslader, die Kraftstoffzuführsteuerungsvorrichtung mit:

    einem Kraftstoffeinspritzventil, das einen Kraftstoff direkt in einen Zylinder einspritzt;
    einer Beurteilungseinrichtung, zum Beurteilen, ob ein Mangel einer tatsächlichen Maschinenleistung verglichen mit einer geforderten Leistung größer ist als ein vorbestimmter zulässiger Grenzwert; und
    einer Erhöhungseinrichtung, zum Zuführen von Zusatzkraftstoff aus dem Kraftstoffeinspritzventil bei einem Arbeitshub, nachdem ein Hauptkraftstoff zugeführt wurde, um eine Abgasenergie zeitweise zu erhöhen, die eine Energie eines in den Abgaslader strömenden Abgases ist, wenn die Beurteilungseinrichtung beurteilt, dass der Leistungsmangel größer ist als der zulässige Grenzwert,

    die Kraftstoffzuführsteuerungsvorrichtung ferner mit:

    einer Unterdrückungseinrichtung, zum Beurteilen, ob eine Erhöhung der Abgasenergie unter Verwendung des Zusatzkraftstoffs unterdrückt werden soll und zum Verringern einer Zuführmenge des Zusatzkraftstoffs, wenn beurteilt wird, dass die Erhöhung der Abgasenergie unter Verwendung des Zusatzkraftstoffs unterdrückt werden soll,
    wobei die Unterdrückungseinrichtung eine Abgasemissionsmengenvorhersageeinrichtung, zum Vorhersagen einer Abgasemissionsmenge, unter der Annahme, dass der Zusatzkraftstoff zugeführt wird, aufweist, und wobei die Unterdrückungseinrichtung beurteilt, dass die Erhöhung der Abgasenergie unter Verwendung des Zusatzkraftstoffs unterdrückt werden soll, wenn die vorhergesagte Abgasemissionsmenge größer ist als eine im Voraus bestimmte festgelegte Abgasemissionsmenge, und **dadurch gekennzeichnet, dass**

    ein Partikelfilter, zum Sammeln von in dem Abgas enthaltenen Partikeln in einem Abgaspfad der Brennkraftmaschine angeordnet ist, wobei die Unterdrückungseinrichtung eine Einrichtung zum Erlangen einer Zunahme der gesammelten Menge an Partikeln auf dem Partikelfilter unter der Annahme, dass die Zufuhr des Zusatzkraftstoffs angehalten ist und weiter zum Erlangen einer Änderungsgeschwindigkeit der Zunahme aufweist, wenn die vorhergesagte Abgasemissionsmenge kleiner ist als die festgelegte Abgasemissionsmenge, und wobei die Unterdrückungseinrichtung beurteilt, dass die Zunahme der Abgasenergie unter Verwendung des Zusatzkraftstoffs unterdrückt werden soll, wenn die erlangte Änderungsgeschwindigkeit der Zunahme größer als eine im Voraus bestimmte festgelegte Änderungsgeschwindigkeit ist.

2.  Kraftstoffzuführsteuerungsvorrichtung für eine Brennkraftmaschine mit einem Abgaslader, die Kraftstoffzuführsteuerungsvorrichtung mit:

    einem Kraftstoffeinspritzventil, das einen Kraftstoff direkt in einen Zylinder einspritzt;
    einer Beurteilungseinrichtung, zum Beurteilen, ob ein Mangel einer tatsächlichen Maschinenleistung verglichen mit einer geforderten Leistung größer ist als ein vorbestimmter zulässiger Grenzwert; und
    einer Erhöhungseinrichtung, zum Zuführen von Zusatzkraftstoff aus dem Kraftstoffeinspritzventil bei einem Arbeitshub, nachdem ein Hauptkraftstoff zugeführt wurde, um eine Abgasenergie zeitweise zu erhöhen, die eine Energie eines in den Abgaslader strömenden Abgases ist, wenn die Beurteilungseinrichtung beurteilt, dass der Leistungsmangel größer ist als der zulässige Grenzwert,

    die Kraftstoffzuführsteuerungsvorrichtung ferner mit:

    einer Unterdrückungseinrichtung, zum Beurteilen, ob eine Erhöhung der Abgasenergie unter Verwendung des Zusatzkraftstoffs unterdrückt werden soll und zum Verringern einer Zuführmenge des Zusatzkraftstoffs, wenn beurteilt wird, dass die Erhöhung der Abgasenergie unter Verwendung des Zusatzkraftstoffs unterdrückt werden soll, **dadurch gekennzeichnet, dass** ein Partikelfilter, zum Sammeln von in dem Abgas enthaltenen Partikeln in dem Abgaspfad der Brennkraftmaschine angeordnet ist, wobei die Unterdrückungseinrichtung eine Einrichtung zum Erlangen einer Zunahme der auf dem Partikelfilter gesammelten Menge an Partikeln, unter der Annahme, dass die Zufuhr des Zusatzkraftstoffs zugeführt wird, bezüglich dessen unter der Annahme, dass die Zufuhr des Zusatzkraftstoffs angehalten ist, und ebenfalls zum Erlangen einer Änderungsgeschwindigkeit der Zunahme aufweist, und wobei die Unterdrückungseinrichtung beurteilt, dass die Erhöhung der Abgasenergie unter Verwendung des Zusatzkraftstoffs unterdrückt werden soll, wenn die erlangte Änderungsgeschwindigkeit der Zunahme größer als eine im Voraus bestimmte festgelegte Geschwindigkeit ist.

3. Kraftstoffzuführsteuerungsvorrichtung für eine Brennkraftmaschine nach Anspruch 2, wobei die festgelegte Geschwindigkeit in Abhängigkeit eines Maschinenbetriebszustands festgelegt wird.

4. Kraftstoffzuführsteuerungsvorrichtung für eine Brennkraftmaschine mit einem Abgaslader, die Kraftstoffzuführsteuerungsvorrichtung mit:

einem Kraftstoffeinspritzventil, das einen Kraftstoff direkt in einen Zylinder einspritzt;
einer Beurteilungseinrichtung, zum Beurteilen, ob ein Mangel einer tatsächlichen Maschinenleistung verglichen mit einer geforderten Leistung größer ist als ein vorbestimmter zulässiger Grenzwert; und
einer Erhöhungseinrichtung, zum Zuführen von Zusatzkraftstoff aus dem Kraftstoffeinspritzventil bei einem Arbeitshub, nachdem ein Hauptkraftstoff zugeführt wurde, um eine Abgasenergie zeitweise zu erhöhen, die eine Energie eines in den Abgaslader strömenden Abgases ist, wenn die Beurteilungseinrichtung beurteilt, dass der Leistungsmangel größer ist als der zulässige Grenzwert,

die Kraftstoffzuführsteuerungsvorrichtung ferner mit:

einer Unterdrückungseinrichtung, zum Beurteilen, ob eine Erhöhung der Abgasenergie unter Verwendung des Zusatzkraftstoffs unterdrückt werden soll und zum Verringern einer Zuführmenge des Zusatzkraftstoffs, wenn beurteilt wird, dass die Erhöhung der Abgasenergie unter Verwendung des Zusatzkraftstoffs unterdrückt werden soll, **dadurch gekennzeichnet, dass** ein Partikelfilter, zum Sammeln von in dem Abgas enthaltenen Partikeln in dem Abgaspfad der Brennkraftmaschine angeordnet ist, wobei die Unterdrückungseinrichtung eine Einrichtung zum Erlangen der gesammelten Menge von Partikeln auf dem Partikelfilter aufweist, und wobei die Unterdrückungseinrichtung beurteilt, dass die Zunahme der Abgasenergie unter Verwendung des Zusatzkraftstoffs unterdrückt werden soll, wenn die gesammelte Partikelmenge größer ist als ein im Voraus bestimmter festgelegter Partikelwert oder diesen übersteigt.

5. Kraftstoffzuführsteuerungsvorrichtung für eine Brennkraftmaschine nach einem der Ansprüche 1 bis 4, wobei wenn die Unterdrückungseinrichtung beurteilt, dass die Erhöhung der Abgasenergie unter Verwendung des Zusatzkraftstoffs unterdrückt werden soll, die Unterdrückungseinrichtung die Zufuhr des Zusatzkraftstoffs unabhängig davon anhält, ob der Leistungsmangel größer ist als der zulässige Grenzwert.

6. Kraftstoffzuführsteuerungsvorrichtung für eine Brennkraftmaschine nach einem der Ansprüche 1 bis 4, wobei die Erhöhungseinrichtung die Erhöhung der Abgasenergie unter Verwendung des Zusatzkraftstoffs anhält, wenn beurteilt wird, dass der Leistungsmangel kleiner ist als der zulässige Grenzwert.

7. Kraftstoffzuführsteuerungsvorrichtung für eine Brennkraftmaschine nach einem der Ansprüche 1 bis 4, wobei die Beurteilungseinrichtung einen repräsentativen Wert einer erforderlichen Leistung, der die erforderliche Leistung repräsentiert, beziehungsweise einen repräsentativen Wert einer tatsächlichen Leistung erlangt, der die tatsächliche Maschinenleistung repräsentiert, sowie einen repräsentativen Wert eines Leistungsmangels erlangt, der den Leistungsmangel repräsentiert, indem sie den repräsentativen Wert der tatsächlichen Leistung von dem repräsentativen Wert der erforderlichen Leistung subtrahiert, und wobei die Beurteilungseinrichtung beurteilt, dass der Leistungsmangel größer ist als der zulässige Grenzwert, wenn der repräsentative Wert des Leistungsmangels größer ist als ein im Voraus bestimmter festgelegter Wert.

8. Kraftstoffzuführsteuerungsvorrichtung für eine Brennkraftmaschine nach einem der Ansprüche 1 bis 4, wobei sowohl die erforderliche Leistung als auch die tatsächliche Maschinenleistung durch das erforderliche und tatsächliche Drehmoment repräsentiert wird, das auf der Basis eines Niederdrückens eines Gaspedals erlangt wird, und/oder den erforderlichen und tatsächlichen Ladedruck, der auf der Basis eines Niederdrückens eines Gaspedals erlangt wird.

9. Kraftstoffzuführsteuerungsvorrichtung für eine Brennkraftmaschine nach einem der Ansprüche 1 bis 4, wobei die Brennkraftmaschine eine Selbstzünderbrennkraftmaschine ist.

**Revendications**

1. Dispositif de contrôle de l'alimentation en carburant pour un moteur à combustion interne ayant un turbocompresseur d'échappement, le dispositif de contrôle de l'alimentation en carburant comprenant :

   un injecteur de carburant qui injecte du carburant dans un cylindre directement ;
   des moyens d'évaluation pour juger si une insuffisance de puissance moteur effective par rapport à une puissance requise est supérieure à une limite admissible prédéterminée ; et
   des moyens d'augmentation pour fournir du carburant auxiliaire provenant de l'injecteur de carburant, à une course d'explosion, après l'alimentation du carburant principal, afin d'augmenter temporairement une énergie d'échappement, qui est l'énergie des gaz d'échappement qui s'écoulent dans le turbocompresseur d'échappement, quand les moyens d'évaluation jugent que l'insuffisance de puissance est supérieure à la limite admissible,

   le dispositif de contrôle de l'alimentation en carburant comprenant en outre :

   des moyens de suppression pour juger si une augmentation de l'énergie d'échappement, en utilisant le carburant auxiliaire, doit être supprimée, et pour réduire une quantité d'alimentation du carburant auxiliaire quand il est jugé que l'augmentation de l'énergie d'échappement utilisant le carburant auxiliaire doit être supprimée, dans lequel les moyens de suppression comprennent des moyens de prédiction de la quantité d'émission à l'échappement, pour prédire une quantité d'émission à l'échappement, en supposant que le carburant auxiliaire est alimenté, et dans lequel les moyens de suppression jugent que l'augmentation de l'énergie d'échappement en utilisant le carburant auxiliaire doit être supprimée, quand la quantité d'émission à l'échappement prédite est supérieure à une quantité d'émission à l'échappement établie, déterminée par avance, et **caractérisé en ce que**
   un filtre à particules, pour collecter les matières particulaires contenues dans les gaz d'échappement est disposé dans un chemin d'échappement du moteur à combustion interne, dans lequel les moyens de suppression comprennent des moyens pour, quand la quantité d'émission à l'échappement prédite est inférieure à la quantité d'émission à l'échappement établie, obtenir une augmentation de la quantité collectée de matières particulières sur le filtre à particules, en supposant que l'alimentation du carburant auxiliaire est arrêtée et également pour obtenir un taux de changement de l'augmentation, et dans lequel les moyens de suppression jugent que l'augmentation de l'énergie d'échappement, en utilisant le carburant auxiliaire, doit être supprimée, quand le taux de changement de l'augmentation obtenu est supérieur à un taux de changement établi, déterminé par avance.

2. Dispositif de contrôle de l'alimentation en carburant pour un moteur à combustion interne, ayant un turbocompresseur d'échappement, le dispositif de contrôle de l'alimentation en carburant comprenant :

   un injecteur de carburant qui injecte du carburant dans un cylindre directement ;
   des moyens d'évaluation pour juger si une insuffisance de puissance moteur effective par rapport à une puissance requise est supérieure à une limite admissible prédéterminée ; et
   des moyens d'augmentation pour fournir du carburant auxiliaire provenant de l'injecteur de carburant, à une course d'explosion, après l'alimentation du carburant principal, afin d'augmenter temporairement une énergie d'échappement, qui est l'énergie des gaz d'échappement qui s'écoulent dans le turbocompresseur d'échappement, quand les moyens d'évaluation jugent que l'insuffisance de puissance est supérieure à la limite admissible,

   le dispositif de contrôle de l'alimentation en carburant comprenant en outre :

   des moyens de suppression pour juger si une augmentation de l'énergie d'échappement, en utilisant le carburant auxiliaire, doit être supprimée, et pour réduire une quantité d'alimentation du carburant auxiliaire, quand il est jugé que l'augmentation de l'énergie d'échappement utilisant le carburant auxiliaire doit être supprimée, **caractérisé en ce que**
   un filtre à particules pour collecter les matières particulaires contenues dans les gaz d'échappement est disposé dans un chemin d'échappement du moteur à combustion interne, dans lequel les moyens de suppression comprennent des moyens pour obtenir une augmentation de la quantité collectée de matières particulières sur le filtre à particules, en supposant que l'alimentation du carburant auxiliaire est fournie, par rapport à la supposition selon laquelle l'alimentation du carburant auxiliaire est arrêtée, et également pour obtenir un taux de changement de l'augmentation, et dans lequel les moyens de suppression jugent que l'augmentation de l'énergie d'échappement, en utilisant le carburant auxiliaire, doit être supprimée, quand le taux de changement de l'augmentation obtenu est supérieur à un taux de changement établi, déterminé par avance.

3. Dispositif de contrôle de l'alimentation en carburant pour un moteur à combustion interne selon la revendication 2, dans lequel le taux établi est établi en fonction d'un état de fonctionnement d'un moteur.

4. Dispositif de contrôle de l'alimentation en carburant pour un moteur à combustion interne, ayant un turbocompresseur d'échappement, le dispositif de contrôle de l'alimentation en carburant comprenant :

un injecteur de carburant qui injecte du carburant dans un cylindre directement ; des moyens d'évaluation pour juger si une insuffisance de puissance moteur effective par rapport à une puissance requise est supérieure à une limite admissible prédéterminée ; et des moyens d'augmentation pour fournir du carburant auxiliaire provenant de l'injecteur de carburant, à une course d'explosion, après l'alimentation du carburant principal, afin d'augmenter temporairement une énergie d'échappement, qui est l'énergie des gaz d'échappement qui s'écoulent dans le turbocompresseur d'échappement, quand les moyens d'évaluation jugent que l'insuffisance de puissance est supérieure à la limite admissible,

le dispositif de contrôle de l'alimentation en carburant comprenant en outre :

des moyens de suppression pour juger si une augmentation de l'énergie d'échappement, en utilisant le carburant auxiliaire, doit être supprimée, et pour réduire une quantité d'alimentation du carburant auxiliaire, quand il est jugé que l'augmentation de l'énergie d'échappement utilisant le carburant auxiliaire doit être supprimée, **caractérisé en ce que** un filtre à particules pour collecter les matières particulaires contenues dans les gaz d'échappement est disposé dans un chemin d'échappement du moteur à combustion interne, dans lequel les moyens de suppression comprennent des moyens pour obtenir la quantité collectée de matières particulaires sur le filtre à particules, et dans lequel les moyens de suppression jugent que l'augmentation de l'énergie d'échappement, en utilisant le carburant auxiliaire, doit être supprimée, quand la quantité de matières particulaires collectées est supérieure ou dépasse une valeur de matières particulaires établie, déterminée par avance.

5. Dispositif de contrôle de l'alimentation en carburant pour un moteur à combustion interne, selon l'une quelconque des revendications 1 à 4, dans lequel, quand les moyens de suppression jugent que l'augmentation de l'énergie d'échappement, en utilisant le carburant auxiliaire, doit être supprimée, les moyens de suppression arrêtent l'alimentation du carburant auxiliaire, indépendamment du fait que l'insuffisance de puissance soit supérieure ou non à la limite admissible.

6. Dispositif de contrôle de l'alimentation en carburant pour un moteur à combustion interne, selon l'une quelconque des revendications 1 à 4, dans lequel les moyens d'augmentation arrêtent l'augmentation de l'énergie d'échappement, en utilisant le carburant auxiliaire, quand il est jugé que l'insuffisance de puissance est inférieure à la limite admissible.

7. Dispositif de contrôle de l'alimentation en carburant pour un moteur à combustion interne, selon l'une quelconque des revendications 1 à 4, dans lequel les moyens d'évaluation obtiennent une valeur représentative de la puissance requise, qui représente la puissance requise et une valeur représentative de la puissance effective qui représente la puissance effective du moteur, respectivement, et obtiennent une valeur représentative de l'insuffisance de puissance qui représente l'insuffisance de puissance, en soustrayant la valeur représentative de la puissance effective de la valeur représentative de la puissance requise, et dans lequel les moyens d'évaluation jugent que l'insuffisance de puissance est supérieure à la limite admissible quand la valeur représentative de l'insuffisance de puissance est supérieure à une valeur établie, déterminée par avance.

8. Dispositif de contrôle de l'alimentation en carburant pour un moteur à combustion interne, selon l'une quelconque des revendications 1 à 4, dans lequel chacune parmi la puissance requise et la puissance effective du moteur est représentée par les couples requis et effectif obtenus sur la base d'une pression d'une pédale d'accélérateur et/ou des pressions de turbocompression requise et effective obtenues sur la base d'une pression d'une pédale d'accélérateur.

9. Dispositif de contrôle de l'alimentation en carburant pour un moteur à combustion interne, selon l'une quelconque des revendications 1 à 4, dans lequel le moteur à combustion interne est un moteur à combustion interne de type à allumage par compression.

# Fig.1

DEPRESSION SENSOR

CRANK ANGLE SENSOR

OUTPUT PORT

INPUT PORT

ROM    RAM    CPU    B-RAM

# Fig.2

# Fig.3

# Fig.4

# Fig.5

NE

$TQT_{11}$   $TQT_{12}$   ------   $TQT_{1n}$
$TQT_{21}$                          ⋮

⋮

$TQT_{m1}$   ------------------   $TQT_{mn}$

ACC

# Fig.6

NE

$TQA_{11}$   $TQA_{12}$   ------   $TQA_{1n}$
$TQA_{21}$                          ⋮

⋮

$TQA_{m1}$   ------------------   $TQA_{mn}$

Qm

# Fig.7

NE

$PMT_{11}$   $PMT_{12}$   ------   $PMT_{1n}$
$PMT_{21}$                          ⋮

⋮

$PMT_{m1}$   ------------------   $PMT_{mn}$

TQT

# Fig. 8

SUPPLY CONTROL OF
AUXILIARY FUEL Qv

100 — CALCULATE OPT

101 — CALCULATE OPA

102 — OPS←OPT−OPA

103 — OPS>LMT ? — NO

104 — YES — SUPPLY AUXILIARY FUEL Qv

105 — STOP SUPPLY OF AUXILIARY FUEL Qv

END

# Fig.9

# Fig.10

# Fig.11

```
          ┌──────────────────────────┐
          │    SUPPLY CONTROL OF      │
          │   AUXILIARY FUEL Qv       │
          └──────────────────────────┘
                       │
      110 ──┤ ┌──────────────────┐
            │ │   CALCULATE OPT   │
            │ └──────────────────┘
                       │
      111 ──┤ ┌──────────────────┐
            │ │   CALCULATE OPA   │
            │ └──────────────────┘
                       │
      112 ──┤ ┌──────────────────┐
            │ │   OPS←OPT-OPA     │
            │ └──────────────────┘
                       │
      113 ──┤ ╔══════════════════╗
            │ ║  SUPPLY AND STOP  ║
            │ ║  CONTROL OF Qv    ║
            │ ╚══════════════════╝
                       │
      114 ──╲        ╱──────────╲         NO
            ╱  XSTP=0  ╲ ──────────────────┐
            ╲    ?    ╱                     │
             ╲──────╱                       │
                │ YES                       │
      115 ──╲        ╱──────────╲    NO     │
            ╱  OPS>LMT ╲ ──────────────┐    │
            ╲    ?    ╱               │    │
             ╲──────╱                 ↓    │
                │ YES                      │
      116 ──┤ ┌──────────────┐    ┌────────────────────┐ ── 117
            │ │SUPPLY AUXILIARY│    │   STOP SUPPLY OF    │
            │ │FUEL Qv         │    │  AUXILIARY FUEL Qv  │
            │ └──────────────┘    └────────────────────┘
                │    ←─────────────────────┘
              ┌──────┐
              │ END  │
              └──────┘
```

# Fig.12

```
          ┌─────────────────────┐
          │  SUPPLY AND STOP    │
          │  CONTROL OF Qv      │
          └──────────┬──────────┘
                     │
120 ─┐    ┌──────────┴──────────┐
     └──  │   CALCULATE OPS1     │
          └──────────┬──────────┘
                     │
121 ─┐         ╱─────┴─────╲
     └──      ╱             ╲        NO
            ╱   OPS < OPS1    ╲──────────────┐
             ╲       ?       ╱               │
              ╲             ╱                │
               ╲─────┬─────╱                 │
                  YES│                       │
122 ─┐   ┌──────────┴──────────┐   ┌─────────┴─────────┐
     └── │     XSTP ← 1         │   │    XSTP ← 0        │ ─ 123
         └──────────┬──────────┘   └─────────┬─────────┘
                    │◄───────────────────────┘
                    │
              ┌─────┴─────┐
              │    END     │
              └───────────┘
```

# Fig.13

# Fig.14

# Fig.15

# Fig.16

# Fig.17

DPMS1

0

0                                                    TRB

# Fig.18

```
        ┌─────────────────────┐
        │   SUPPLY AND STOP    │
        │   CONTROL OF Qv      │
        └─────────────────────┘
                   │
140 ──┌─────────────────────┐
      │   CALCULATE DOPS     │
      └─────────────────────┘
                   │
141 ──┌─────────────────────┐
      │   CALCULATE DOPS1    │
      └─────────────────────┘
                   │
142 ──          ◇
        ◇  DOPS<DOPS1  ◇ ──── NO
        ◇      ?      ◇         │
                   │            │
                  YES           │
143 ──┌──────────┐      ┌──────────┐── 144
      │ XSTP←1   │      │ XSTP←0   │
      └──────────┘      └──────────┘
                   │            │
                   │←───────────┘
                   │
              ┌─────────┐
              │   END   │
              └─────────┘
```

# Fig.19

# Fig.20A

# Fig.20B

# Fig.21

```
        ┌─────────────────────┐
        │   SUPPLY AND STOP    │
        │   CONTROL OF Qv      │
        └─────────────────────┘
                   │
150 ──┐  ┌─────────────────────┐
      └──│   CALCULATE EEXON    │
         └─────────────────────┘
                   │
151 ──┐        ◇ EEXON>EEX1 ◇ ──── NO
      └──       ?
                │ YES                    │
152 ──┐ ┌──────────┐          ┌──────────┐ ┌── 153
      └─│ XSTP←1    │          │ XSTP←0   │─┘
        └──────────┘          └──────────┘
                │                    │
                │←───────────────────┘
                │
            ( END )
```

# Fig.22A

# Fig.22B

# Fig.22C

# Fig.23

```
        ┌─────────────────────┐
        │  SUPPLY AND STOP     │
        │  CONTROL OF Qv       │
        └─────────────────────┘
                   │
160 ─┐   ┌─────────────────────┐
     └──│  CALCULATE QEMON      │
        └─────────────────────┘
                   │
161 ─┐   ┌─────────────────────┐
     └──│  CALCULATE QEM1       │
        └─────────────────────┘
                   │
162 ─┐        ◇                      NO
     └──  QEMON > QEM1  ──────────────┐
              ?                        │
             YES                       │
163 ─┐  ┌──────────┐        ┌──────────┐ ┌─ 164
     └──│ XSTP ← 1 │        │ XSTP ← 0 │─┘
        └──────────┘        └──────────┘
              │                   │
              │←──────────────────┘
        ┌──────────┐
        │   END    │
        └──────────┘
```

# Fig.24

# Fig.25

```
        ┌─────────────────────┐
        │  SUPPLY AND STOP     │
        │  CONTROL OF Qv       │
        └─────────────────────┘
                   │
        ┌─────────────────────┐
        │  CALCULATE QEMON     │──170
        └─────────────────────┘
                   │
        ┌─────────────────────┐
        │  CALCULATE QEM1      │──171
        └─────────────────────┘
                   │
              ╱─────────╲  172
             ╱           ╲      NO
            ╱ QEMON>QEM1  ╲──────────────┐
            ╲      ?      ╱               │
             ╲           ╱      ┌─────────────────────────┐
              ╲─────────╱       │ CALCULATE QQDPFON       │──174
                   │ YES        └─────────────────────────┘
                   │                      │
                   │            ┌─────────────────────────┐
                   │            │ CALCULATE QQDPOFF       │──175
                   │            └─────────────────────────┘
                   │                      │
                   │            ┌─────────────────────────┐
                   │            │ CALCULATE ΔQDPF         │──176
                   │            └─────────────────────────┘
                   │                      │
                   │            ┌─────────────────────────┐
                   │            │ CALCULATE DΔ            │──177
                   │            └─────────────────────────┘
                   │                      │
                   │            ┌─────────────────────────┐
                   │            │ CALCULATE DΔ1           │──178
                   │            └─────────────────────────┘
                   │                      │
                   │                 ╱─────────╲ 179
                   │                ╱           ╲    NO
                   │               ╱  DΔ>DΔ1     ╲──────┐
                   │               ╲     ?       ╱      │
                   │                ╲           ╱       │
                   │                 ╲─────────╱        │
                   │                      │ YES         │
                   │◄─────────────────────┘             │
                   │                                    │
        ┌──────────────┐              ┌──────────────┐  │
173──── │  XSTP←1      │              │  XSTP←0      │──180
        └──────────────┘              └──────────────┘
                   │                      │
                   │◄─────────────────────┘
                   │
             ┌───────────┐
             │    END    │
             └───────────┘
```

# Fig.26

# Fig.27

List of Reference Numerals

1 ... Engine body

5 ... Turbocharger

13 ... Particulate filer

15 ... Fuel injector

43 ... Accelerator pedal

## REFERENCES CITED IN THE DESCRIPTION

**Patent documents cited in the description**

- FR 2840649 A1
- JP 7103013 A